# EUROPEAN PATENT APPLICATION

(11) **EP 4 672 800 A1**
(43) Date of publication of application: **31.12.2025**
(21) Application number: 23923370.3
(22) Date of filing: 23.02.2023
(51) Int. Cl.: H04W 24/02

(54) **LOCAL MEASUREMENT PROCESSING METHOD AND APPARATUS**

(71) Applicant: Beijing Xiaomi Mobile Software Co., Ltd., Beijing 100085 (CN)
(72) Inventor: LIU, Xiaofei, Beijing 100085 (CN); WU, Yumin, Beijing 100085 (CN)
(74) Representative: Gunzelmann, Rainer
(86) International application number: PCT/CN2023/078008
(87) International publication number: WO 2024/174193

(57) **Abstract**

Disclosed in the embodiments of the present disclosure are a local measurement processing method and apparatus. The method comprises: a first node receiving or sending a first signal; determining first information of the first signal, and auxiliary information; and processing the first information according to the auxiliary information, so as to generate a sensing measurement result. Therefore, a first node can quickly process first information according to auxiliary information, so as to obtain a sensing measurement result, such that the efficiency of sensing solution processing can be improved, a time delay can be reduced, and a signaling overhead can be reduced.

## Description

### FIELD

The present disclosure relates to the field of communication technologies, and in particular relates to a local measurement processing method and apparatus.

### BACKGROUND

In related technologies, a node that sends and/or receives a signal needs to send configuration information and a measurement result of the signal to a central control node, where the configuration information and measurement result are processed to obtain a sensing measurement result.

### SUMMARY

Embodiments of the present disclosure provide a local measurement processing method and apparatus, in which a first node can process first information quickly based on auxiliary information, to obtain a sensing measurement result, which can improve an efficiency of sensing solution processing, reduce a latency, and save signaling overhead.

In a first aspect, embodiments of the present disclosure provide a local measurement processing method. The method is performed by a first node, and includes: receiving or sending a first signal; determining first information of the first signal, and auxiliary information; processing the first information according to the auxiliary information, to generate a sensing measurement result.

In this technical solution, the first node receives or sends the first signal; determines the first information of the first signal and auxiliary information; and processes the first information based on the auxiliary information to generate the sensing measurement result. Thus, the first node can quickly process the first information based on the auxiliary information, to obtain the sensing measurement result, which can improve the efficiency of sensing solution processing, reduce latency, and save signaling overhead.

In a second aspect, embodiments of the present disclosure provide another local measurement processing method. The method is performed by a second node, and includes: sending a first signal to a first node, wherein the first signal is used by the first node to determine first information of the first signal, and the first information is used by the first node to process the first information according to auxiliary information, to generate a sensing measurement result.

In a third aspect, embodiments of the present disclosure provide yet another local measurement processing method. The method is performed by a third node, and includes: sending a second signal to a first node, wherein the second signal is used by the first node to determine second information of the second information, wherein the second information is used by the first node to generate an information measurement result according to first information and/or the second information, and generate a sensing measurement result according to the information measurement result and sensing auxiliary information.

In a fourth aspect, embodiments of the present disclosure provide a communication device. The communication device has some or all of the functions of the first node in the method described in the first aspect above. For example, the communication device may have the functions in some or all of the embodiments disclosed herein, or may have the function of separately implementing any of the embodiments disclosed herein. The functions can be implemented through hardware or by executing corresponding software through hardware. The hardware or software includes one or more units or modules corresponding to the above functions.

In an implementation, the structure of the communication device may include a transceiver module and a processing module, wherein the processing module is configured to support the communication device to perform the corresponding functions in the above method, and the transceiver module is configured to support communication between the communication device and other devices. The communication device may also include a storage module coupled with the transceiver module and the processing module, which stores computer programs and data necessary for the communication device.

In an implementation, the communication device includes: a transceiver module, configured to receive or send a first signal; and a processing module, configured to determine first information of the first signal, and auxiliary information; and process the first information according to the auxiliary information, to generate a sensing measurement result.

In a fifth aspect, embodiments of the present disclosure provide another communication device. The communication device has some or all of the functions of the second node in the method described in the second aspect above. For example, the communication device may have the functions in some or all of the embodiments disclosed herein, or may have the function of separately implementing any of the embodiments disclosed herein. The functions can be implemented through hardware or by executing corresponding software through hardware. The hardware or software includes one or more units or modules corresponding to the above functions.

In an implementation, the structure of the communication device may include a transceiver module and a processing module, wherein the processing module is configured to support the communication device to perform the corresponding functions in the above method, and the transceiver module is configured to support communication between the communication device and other devices. The communication device may also include a storage module coupled with the transceiver module and the processing module, which stores computer programs and data necessary for the communication device.

In an implementation, the communication device includes: a transceiver module, configured to send a first signal to a first node, wherein the first signal is used by the first node to determine first information of the first signal, and the first information is used by the first node to process the first information according to auxiliary information, to generate a sensing measurement result.

In a sixth aspect, embodiments of the present disclosure provide yet another communication device. The communication device has some or all of the functions of the third node in the method described in the third aspect above. For example, the communication device may have the functions in some or all of the embodiments disclosed herein, or may have the function of separately implementing any of the embodiments disclosed herein. The functions can be implemented through hardware or by executing corresponding software through hardware. The hardware or software includes one or more units or modules corresponding to the above functions.

In an implementation, the structure of the communication device may include a transceiver module and a processing module, wherein the processing module is configured to support the communication device to perform the corresponding functions in the above method, and the transceiver module is configured to support communication between the communication device and other devices. The communication device may also include a storage module coupled with the transceiver module and the processing module, which stores computer programs and data necessary for the communication device.

In an implementation, the communication device includes: a transceiver module, configured to send a second signal to a first node, wherein the second signal is used by the first node to determine second information of the second information, wherein the second information is used by the first node to generate an information measurement result according to first information and/or the second information, and generate a sensing measurement result according to the information measurement result and sensing auxiliary information.

In a seventh aspect, embodiments of the present disclosure provide a communication device. The communication device includes a processor. When the processor calls a computer program in a memory, the method described in the first aspect above is implemented.

In an eighth aspect, embodiments of the present disclosure provide a communication device. The communication device includes a processor. When the processor calls a computer program in a memory, the method described in the second aspect above is implemented.

In a ninth aspect, embodiments of the present disclosure provide a communication device. The communication device includes a processor. When the processor calls a computer program in a memory, the method described in the first aspect above is implemented.

In a tenth aspect, embodiments of the present disclosure provide a communication device. The communication device includes a processor and a memory. The memory stores a computer program. The processor is configured to execute the computer program stored in the memory, to cause the communication device to implement the method described in the first aspect above.

In an eleventh aspect, embodiments of the present disclosure provide a communication device. The communication device includes a processor and a memory. The memory stores a computer program. The processor is configured to execute the computer program stored in the memory, to cause the communication device to implement the method described in the second aspect above.

In a twelfth aspect, embodiments of the present disclosure provide a communication device. The communication device includes a processor and a memory. The memory stores a computer program. The processor is configured to execute the computer program stored in the memory, to cause the communication device to implement the method described in the third aspect above.

In a thirteenth aspect, embodiments of the present disclosure provide a communication device. The communication device includes a processor and an interface circuit. The interface circuit is configured to receive code instructions and transmit the code instructions to the processor. The processor is configured to run the code instructions to cause the device to implement the method described in the first aspect above.

In a fourteenth aspect, embodiments of the present disclosure provide a communication device. The communication device includes a processor and an interface circuit. The interface circuit is configured to receive code instructions and transmit the code instructions to the processor. The processor is configured to run the code instructions to cause the device to implement the method described in the second aspect above.

In a fifteenth aspect, embodiments of the present disclosure provide a communication device. The communication device includes a processor and an interface circuit. The interface circuit is configured to receive code instructions and transmit the code instructions to the processor. The processor is configured to run the code instructions to cause the device to implement the method described in the third aspect above.

In a sixteenth aspect, embodiments of the present disclosure provide a local measurement processing system. The system includes a communication device as described in the fourth aspect, a communication device as described in the fifth aspect, and a communication device as described in the sixth aspect. Alternatively, the system includes a communication device as described in the seventh aspect, a communication device as described in the eighth aspect, and a communication device as described in the ninth aspect. Alternatively, the system includes a communication device as described in the tenth aspect, a communication device as described in the eleventh aspect, and a communication device as described in the twelfth aspect. Alternatively, the system includes a communication device as described in the thirteenth aspect, a communication device as described in the fourteenth aspect, and a communication device as described in the fifteenth aspect.

In a seventeenth aspect, embodiments of the present disclosure provide a computer-readable storage medium, configured to store instructions used by the first node, and when the instructions are executed, the first node is caused to execute the method described in the first aspect.

In an eighteenth aspect, embodiments of the present disclosure provide a computer-readable storage medium, configured to store instructions used by the second node, and when the instructions are executed, the second node is caused to execute the method described in the second aspect.

In a nineteenth aspect, embodiments of the present disclosure provide a computer-readable storage medium, configured to store instructions used by the third node, and when the instructions are executed, the third node is caused to execute the method described in the third aspect.

In a twentieth aspect, embodiments of the present disclosure provide a computer program product including a computer program, which when run on a computer, causes the computer to implement the method described in the first aspect.

In a twenty-first aspect, embodiments of the present disclosure provide a computer program product including a computer program, which when run on a computer, causes the computer to implement the method described in the second aspect.

In a twenty-second aspect, embodiments of the present disclosure provide a computer program product including a computer program, which when run on a computer, causes the computer to implement the method described in the third aspect.

In a twenty-third aspect, embodiments of the present disclosure provide a computer program, which when run a computer, causes the computer to implement the method described in the first aspect.

In a twenty-fourth aspect, embodiments of the present disclosure provide a computer program, which when run on a computer, causes the computer to implement the method described in the second aspect.

In a twenty-fifth aspect, embodiments of the present disclosure provide a computer program, which when run on a computer, causes the computer to implement the method described in the third aspect.

### BRIEF DESCRIPTION OF THE DRAWINGS

In order to provide a clearer explanation of the technical solution in embodiments of the present disclosure or background technology, the accompanying drawings required for use in the embodiments of the present disclosure or background technology will be described below.
Fig. 1 is a schematic diagram of flood sensing in a smart city provided in an embodiment of the present disclosure.
Fig. 2 is a schematic diagram of intruder detection in a smart home environment provided in an embodiment of the present disclosure.
Fig. 3 is a schematic diagram of a sensing reference architecture provided in an embodiment of the present disclosure.
Fig. 4 is a schematic diagram of another sensing reference architecture provided in an embodiment of the present disclosure.
Fig. 5 is a schematic diagram of yet another sensing reference architecture provided in an embodiment of the present disclosure.
Fig. 6 is a schematic diagram of still yet another sensing reference architecture provided in an embodiment of the present disclosure.
Fig. 7 is a flowchart of a local measurement processing method provided in an embodiment of the present disclosure.
Fig. 8 is a flowchart of another local measurement processing method provided in an embodiment of the present disclosure.
Fig. 9a is a flowchart of an information determining method provided in an embodiment of the present disclosure.
Fig. 9b is a flowchart of another information determining method provided in an embodiment of the present disclosure.
Fig. 9c is a flowchart of yet another information determining method provided in an embodiment of the present disclosure.
Fig. 10a is a flowchart of yet another information determining method provided in an embodiment of the present disclosure.
Fig. 10b is a flowchart of yet another information determining method provided in an embodiment of the present disclosure.
Fig. 11a is a flowchart of yet another information determining method provided in an embodiment of the present disclosure.
Fig. 11b is a flowchart of yet another information determining method provided in an embodiment of the present disclosure.
Fig. 12 is a flowchart of yet another local measurement processing method provided in an embodiment of the present disclosure.
Fig. 13 is a flowchart of yet another local measurement processing method provided in an embodiment of the present disclosure.
Fig. 14 is a flowchart of yet another local measurement processing method provided in an embodiment of the present disclosure.
Fig. 15 is a flowchart of yet another local measurement processing method provided in an embodiment of the present disclosure.
Fig. 16 is a flowchart of an information sending method provided in an embodiment of the present disclosure.
Fig. 17 is a flowchart of another information sending method provided in an embodiment of the present disclosure.
Fig. 18 is a flowchart of yet another information sending method provided in an embodiment of the present disclosure.
Fig. 19 is a flowchart of yet another local measurement processing method provided in an embodiment of the present disclosure.
Fig. 20 is a flowchart of yet another local measurement processing method provided in an embodiment of the present disclosure.
Fig. 21a is a flowchart of yet another local measurement processing method provided in an embodiment of the present disclosure.
Fig. 21b is a flowchart of yet another local measurement processing method provided in an embodiment of the present disclosure.
Fig. 22 is a block diagram of a communication device provided in an embodiment of the present disclosure.
Fig. 23 is a block diagram of another communication device provided in an embodiment of the present disclosure.
Fig. 24 is a block diagram of a chip provided in an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The embodiments described below with reference to the accompanying drawings are exemplary and intended to explain the present disclosure, and should not be construed as limiting the present disclosure. In the description disclosed herein, unless otherwise specified, "/" means "or", for example, A/B can represent A or B; "and/or" in this article is only a description of the association relationship between related objects, indicating that there can be three types of relationships, for example, A and/or B can represent: the existence of A alone, the existence of both A and B, and the existence of B alone.

The terms used in embodiments of the present disclosure are only for the purpose of describing specific embodiments and are not intended to limit the embodiments of the present disclosure. The singular forms of "a" and "the" used in embodiments of the present disclosure and the accompanying claims are also intended to include the majority form, unless the context clearly indicates otherwise.

It should be understood that although the terms first, second, third, etc. may be used to describe various information in embodiments of the present disclosure, these information should not be limited by the terms. These terms are only used to distinguish information of the same type from each other. For example, without departing from the scope of the embodiments of the present disclosure, the first information may also be referred to as the second information, and similarly, the second information may also be referred to as the first information. Depending on the context, the words 'if' and 'when' used here can be interpreted as 'in a case' or 'upon' or 'in response to determining'.

The following provides a detailed description of the embodiments of the present disclosure, examples of which are shown in the accompanying drawings, where the same or similar reference numerals throughout indicate the same or similar elements. The embodiments described below with reference to the accompanying drawings are exemplary and intended to explain the present disclosure, and should not be construed as limiting the present disclosure.

The technical solution provided in this disclosure can be applied to various communication systems, such as 5th generation (5G) or new radio (NR) systems, long term evolution (LTE) systems, LTE frequency division duplex (FDD) systems, LTE time division duplex (TDD) systems, etc. The technical solution provided in this disclosure can also be applied to future communication systems, such as the 6th generation (6G) mobile communication system. The technical solution provided in this disclosure can also be applied to device to device (D2D) communication, vehicle to everything (V2X) communication, machine to machine (M2M) communication, machine type communication (MTC), as well as internet of things (IoT) communication systems or other communication systems.

Before introducing embodiments of the present disclosure, a brief explanation of some of the terms used in the embodiments of the present disclosure will be provided.
1. Terminal is a device that provides voice and/or data connectivity to users. The terminal involved in this disclosure may be a user equipment or terminal device, or a hardware component within the terminal that can implement the functions of the terminal.

In embodiments of the present disclosure, the terminal may be referred to as a user equipment (UE), a mobile station (MS), a mobile terminal (MT), etc., for example, it may include a handheld device with wireless connection function or a processing device connected to a wireless modem. The terminal can communicate with the core network via a radio access network (RAN) and exchange voice and/or data with the RAN. Examples of some terminals include personal communication service (PCS) phones, cordless phones, session initiation protocol (SIP) phones, wireless local loop (WLL) stations, personal digital assistants (PDAs), barcodes, radio frequency identification (RFID), sensors, satellite navigation systems, such as global positioning system (GPS), Beidou positioning system, laser scanners and other information sensing devices.

Terminals may also be wearable devices. The wearable devices, also known as wearable smart devices, is a general term for devices that apply wearable technology to intelligent design and develop wearable devices for daily wear, such as glasses, gloves, watches, clothing, and shoes. Wearable devices are portable devices that can be worn directly on the body or integrated into the user's clothing or accessories. Wearable devices are not just hardware devices, but also achieve powerful functions through software support, data interaction, and cloud interaction. Generalized wearable smart devices include fully functional, large-sized devices that can achieve complete or partial functions without relying on smartphones, such as smart watches or smart glasses, as well as devices that only focus on a certain type of application function and need to be used in conjunction with other devices such as smartphones, such as smart bracelets, smart helmets, smart jewelry, etc. for physical sign monitoring. The terminal may also be a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, a terminal device in future evolved public land mobile network (PLMN), or a vehicle equipment, a customer premises equipment (CPE), etc. in vehicle to everything (V2X).

The functions of the terminal can be implemented through internal hardware components, which may be processors and/or programmable chips within the terminal. Optionally, the chip may be implemented through an application-specific integrated circuit (ASIC) or a programmable logic device (PLD). The above-mentioned PLD may be any one or any combination of complex programmable logic device (CPLD), field-programmable gate array (FPGA), generic array logic (GAL), and system on a chip (SOC).

The various terminals introduced above, if located on the vehicle (such as placed inside the vehicle or installed inside the vehicle), can be considered as on-board terminals, which are also known as onboard units (OBU).

2. A network device is an entity on the network side used for transmitting or receiving signals. For example, the network device may be an evolved NodeB (eNB), a transmission reception point (TRP), a next generation NodeB (gNB) in NR systems, a base station in other future mobile communication systems, or an access node in wireless fidelity (Wi-Fi) systems. The specific technology and device form adopted by the base station are not limited in embodiments of the present disclosure. The base station provided in embodiments of the present disclosure may be composed of a central unit (CU) and distributed units (DUs), where the CU may also be referred to as a control unit. The CU-DU structure can be used to separate the protocol layers of the base station, with some protocol layer functions centrally controlled by the CU and the remaining or all protocol layer functions distributed in the DUs, which are centrally controlled by the CU.

3. Core network devices: As an example, core network devices (or network elements in the core network) may include any of the following, but are not limited to: network slice selection function (NSSF), authentication server function (AUSF), unified data management (UDM) function, network exposure function (NEF), network repository function (NRF), policy control function (PCF), application function (AF), access and mobility management function (AMF), session management function (SMF), User Plane Function (UPF), Network data analytics function (NWDAF) and sensing function (SF). As an example, the functions of the core network elements mentioned above are as follows.

AMF: mainly used for access control, mobility management, registration and de-registration functions.

SMF: mainly used for user plane network element selection, user plane network element redirection, Internet protocol (IP) address allocation for terminals, as well as session establishment, modification and release, and QoS control.

UPF: mainly used for receiving and forwarding user plane data. For example, UPF can receive user plane data from a data network (DN) and send it to the terminal through a (radio) access network ((R)AN) device. UPF can also receive user plane data from the terminal through the AN device and forward it to DN.

NEF: mainly used to securely open up services and capabilities provided by 3GPP network functions to the outside world.

PCF: a unified policy framework primarily used to guide network behavior, providing policy rule information for control plane network elements (such as AMF, SMF, etc.).

AF: mainly used to provide services to 3GPP networks, such as interacting with PCF for policy control, etc.

NSSF: mainly used for network slicing selection.

UDM: mainly used for subscription data management of terminals, including storage and management of terminal identifiers, access authorization, etc.

AUSF: mainly used for user authentication, etc.

NRF: mainly used to store the description information of network functional entities and the services they provide.

NWDAF: mainly used for intelligent analysis of network status and other data.

SF: mainly used to provide sensing services, etc.

It should be noted that the above-mentioned functions or network elements such as AMF, SMF, UPF, PCF, UDM, UDR, NEF, AF, etc. may be understood as network elements used to implement different functions, such as being combined into network slices as needed. These network elements may be independent devices, or may be integrated into the same device to achieve different functions, or may be network elements in hardware devices, software functions running on dedicated hardware, or virtualization functions instantiated on platforms (such as cloud platforms). The form of the above network elements is not limited in embodiments of the present disclosure.

It should also be understood that the above naming is only defined for the purpose of distinguishing different functions and should not constitute any limitation on this disclosure. This disclosure does not exclude the possibility of using other names in 6G networks and other future networks. For example, in a 6G network, some or all of the aforementioned network elements may use terminology from 5G or may adopt other names.

In addition, for the convenience of understanding the embodiments of the present disclosure, the following explanations are made.

Firstly, in embodiments of the present disclosure, "used to indicate" may include both directly indicate and indirectly indicate. When describing a certain information used to indicate A, it may include the information directly indicating A or indirectly indicating A, but it does not necessarily mean that A is carried in the information.

The information indicated by the information is referred to as the information to be indicated, and there are many ways to indicate the information to be indicated in the specific implementation process, such as but not limited to directly indicating the information to be indicated, such as the information itself or the index of the information to be indicated. It is also possible to indirectly indicate the information to be indicated by indicating other information, where there is a correlation between the other information and the information to be indicated. It is also possible to indicate only a part of the information to be indicated, while the other parts of the information to be indicated are known or pre-agreed upon. For example, it is also possible to use the pre-agreed arrangement order of various information (such as specified in the protocol) to achieve the indication of specific information, thereby reducing the indication overhead to a certain extent.

The information to be indicated can be sent together as a whole or divided into multiple sub information for separate transmission, and the transmission period and/or timing of these sub information can be the same or different. The specific sending method is not limited in this disclosure. The transmission period and/or timing of these sub information can be pre-defined, such as according to the protocol.

Secondly, in this disclosure, the first, second, and various numerical designations (e.g., "Host Node 1", "Host Node 2") are only used for convenience of description and are not intended to limit the scope of the embodiments of the present disclosure. For example, they are used for distinguishing different types of information.

Thirdly, multiple implementations are listed in embodiments of the present disclosure to clearly illustrate the technical solution of the embodiments of the present disclosure. Of course, those skilled in the art can understand that the multiple embodiments provided in this disclosure can be executed separately, combined with the methods of other embodiments in this disclosure, or executed combined with some methods in other related technologies, which is not limited in embodiments of the present disclosure.

Wireless Sensing: The wireless signal transmitter emits radio waves, and the wireless signal receiver receives the radio waves. In the process of radio wave transmission, the transmission of the radio waves may be obstructed by some objects (hereinafter referred to as reflectors), resulting in wireless transmission effects such as reflection, diffraction, transmission, phase change, Doppler shift, and signal intensity change during radio wave transmission. The wireless signal receiver can obtain some information about the reflector by receiving radio waves, comparing the transmitted signal with the received signal, or recording the historical change information of the received signal.
The information of the reflector may include:

coordinate information (such as coordinates relative to the wireless signal receiver (such as distance, horizontal angle, vertical angle, etc.); speed information (such as movement speed and direction relative to the wireless signal receiver, etc.); behavioral pattern information (such as movement information such as running, walking, approaching, falling, swinging, etc.) or weather information (such as rain, snow, etc.); or traffic information (such as congestion, accidents, etc.).

In wireless networks (such as cellular networks), the wireless signal transmitter may be at least one of the following:
a base station;
a radio access point (such as Wi-Fi access point);
a terminal.
The wireless signal receiver may be at least one of the following:
a base station;
a radio access point;
a terminal.

The wireless signal transmitter and the wireless signal receiver may be from the same device or different devices. For example, 1) base station A sends and base station B receives; 2) base station A sends and base station A receives, 3) terminal A sends and terminal B receives; 4) terminal A sends and terminal A receives; 5) base station A sends and terminal A receives; 6) terminal A sends and base station A receives.

Flood detection: Due to climate change in recent years, large amounts of rainfall may sometimes occur in a small area within a short period of time. This result, especially in urban areas, has led to flooding, even in areas where floods have not occurred in the past. When floods are about to occur on roads, people may unknowingly enter dangerous areas. Once a flood really occurs there, it could lead to loss of life. Cameras and other sensors are used for flood monitoring in areas where floods are expected to occur. However, due to recent climate change, it may be difficult to identify places where floods are expected to occur. By using radio waves, it is possible to effectively identify the places where floods occur.

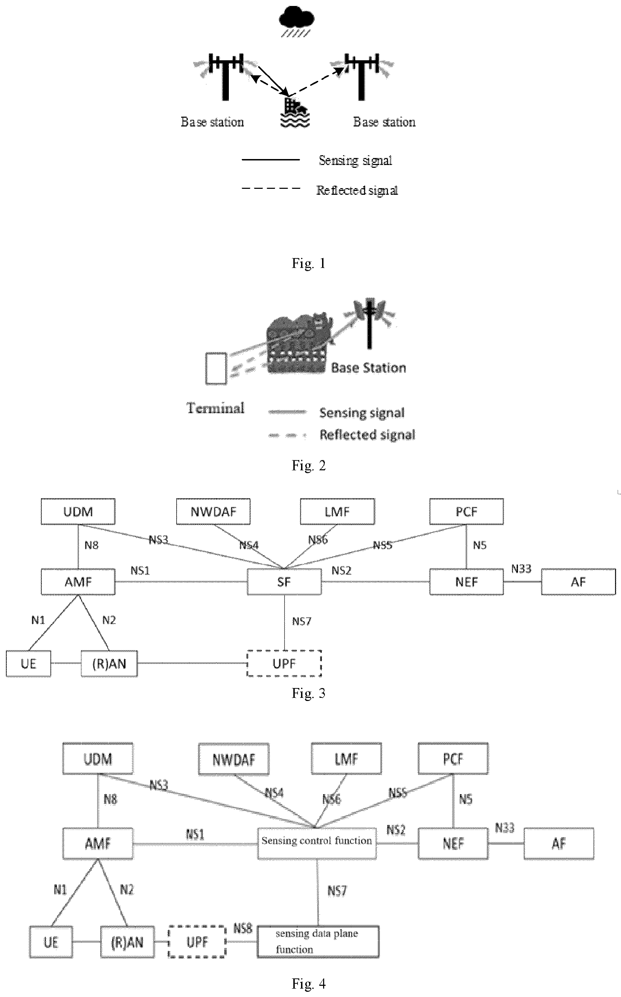

As shown in Fig. 1, 1. The base stations owned by mobile operator A are deployed around the road. Mobile operator A senses the road surface of city B. This type of sensing is carried out using radio waves. The result of sensing information, including whether floods have occurred on the road, is communicated to the road managers in City B. 2. Road administrators typically use sensor information, including information from mobile operator # A, to monitor flood conditions on roads. In addition, during heavy rain, administrators can request mobile operator # A to increase the frequency of monitoring road conditions, and mobile operator # A will monitor the situation more frequently according to this requirement. 3. If news of a flood occurs, the administrator suggests that people in the relevant area evacuate the area. Administrators consult through mobile networks. 4. People who receive advice should evacuate or not enter these areas. 5. Now B city trusts mobile operator A and allows it to provide evacuation advice to people during floods without the need for B city's intervention. The next time a similar flood occurs, mobile operator A will directly send evacuation advice to people.

Intrusion detection: Detecting intruders (including people or harmful animals) entering private property is an important thing to ensure that residents in private property feel comfortable and safe. Various technologies such as cameras, infrared cameras, and microwave radar are being used for monitoring the surrounding environment. However, these technologies require line of sight, so the locations that can be monitored may be limited.

Wireless signals can monitor locations without line of sight, as well as wider areas. Wireless signal sensing is a supplement to the above technology and can improve detection accuracy. The induction of wireless signals gives residents time to prepare to deal with intruders or drive them away.

As shown in Fig. 2, 1. Smartphones, CPE and other terminals can communicate with outdoor or indoor base stations to monitor 3GPP signals affected by outdoor objects such as people and animals. In addition, the terminal communicates with the base station of the mobile operator and monitors the radio wave status between the terminal and the base station. 2. When an intruder enters the scene, the radio signal will change. The core network processes data to generate a sensing result that an intruder is detected. 3. Residents receive notification of the discovery of intruder.

As shown in Fig. 3, which is a schematic diagram of a sensing reference architecture provided in an embodiment of the present disclosure, SF is deployed in CN.

As shown in Fig. 4, which is a schematic diagram of another sensing reference architecture provided in an embodiment of the present disclosure, SF is deployed in CN with CU-UP separation.

In Fig. 3 and Fig. 4, the N1 interface is the signaling plane interface between AMF and UE, used for exchanging signaling messages between the core network and terminals, such as terminal registration and network access, PDU session establishment of the terminal, and network side configuring policies for terminals, etc.

The N2 interface is the interface between AMF and RAN, used to transmit radio bearer control information from the core network to RAN.

The N8 interface is the interface between AMF and UDM, used for AMF to obtain access and mobility management related subscription data and authentication data from UDM, as well as for AMF to register current mobility management related information of terminals with UDM.

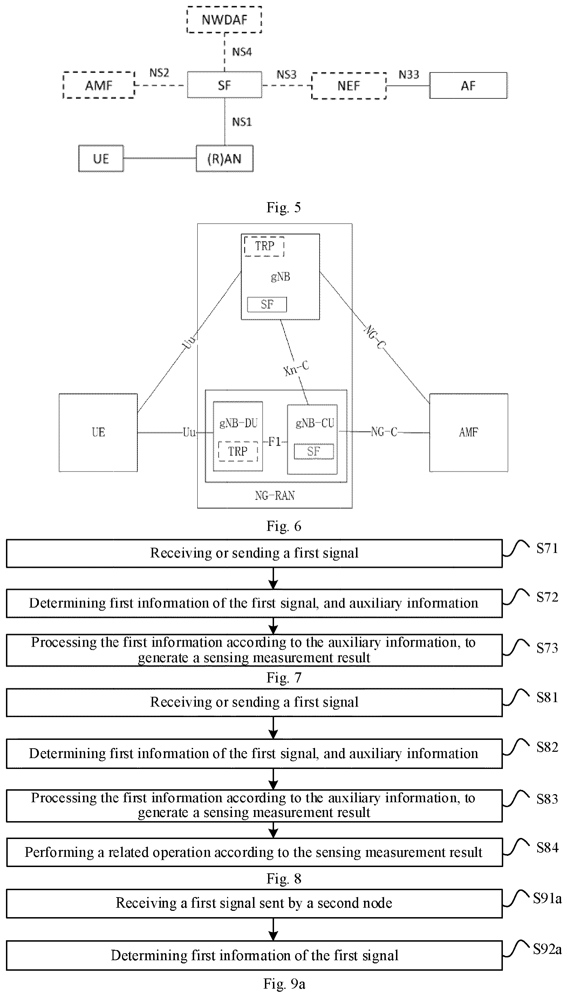

As shown in Fig. 5, which is a schematic diagram of yet another sensing reference architecture provided in an embodiment of the present disclosure, SF serves as a central control node deployed on the RAN side.

As shown in Fig. 6, which is a schematic diagram of yet another sensing reference architecture provided in an embodiment of the present disclosure, SF is deployed inside the base station.

In related technologies, a nodes that sends and/or receives a signal needs to send the configuration information and measurement result of the signal to the central control node, which obtains the sensing measurement result based on the configuration information and measurement result of the signal. However, obtaining the sensing measurement result takes a long time and requires signaling overhead.

Based on this, in an embodiment of the present disclosure, a local measurement processing method is provided, wherein a first node receives and/or sends a first signal; determines first information of the first signal and auxiliary information; processes the first information based on the auxiliary information to generate a sensing measurement result. Thus, the first node can quickly process the first information based on the auxiliary information, to obtain the sensing measurement result, which improves the efficiency of sensing solution processing, reduces latency, and saves signaling overhead.

Please refer to Fig. 7, which is a flowchart of a local measurement processing method provided in an embodiment of the present disclosure. It should be noted that the local measurement processing method in this embodiment of the present disclosure may be performed by a first node. As shown in Fig. 7, the method may include but is not limited to the following steps.

S71, receiving or sending a first signal.

In an embodiment of the present disclosure, the first signal may be a signal for wireless sensing and sensing measurement, such as a sensing signal for flood detection or a sensing signal for house intrusion detection, and so on.

In a possible implementation, the signal used for wireless sensing and sensing measurement may include the sensing signal, and wireless sensing and sensing measurement can be performed based on the sensing signals.

In another possible implementation, the signals used for wireless sensing and sensing measurement may include the sensing signal and the reflected signal of the sensing signal. Wireless sensing and sensing measurement can be performed based on the sensing signal and the reflected signal of the sensing signal.

In yet another possible implementation, the signal used for wireless sensing and sensing measurement may include the reflected signal of the sensing signal, and wireless sensing and sensing measurement can be performed based on the reflected signal of the sensing signal.

It should be noted that the sensing signal used for wireless sensing and sensing measurement may be the signal emitted by a certain node during sensing measurement, and the reflected signal of the sensing signal may be the signal obtained from the signal emitted during sensing measurement and then reflected by the target to be measured and reaching another node, where it is received. Of course, the sensing signal and the reflected signal of the sensing signal can also be referred to by other names, which is not specifically limited in embodiments of the present disclosure.

In embodiments of the present disclosure, the first signal may be the sensing signal, or the reflected signal of the sensing signal, which is not specifically limited in embodiments of the present disclosure.

In embodiments of the present disclosure, the first node may be the node receiving the sensing signal or the reflected signal of the sensing signal, and the first node may receive the first signal; or the first node may be the node sending the sensing signal, and the first node may send the first signal.

In a possible implementation, in a case where the signal used for wireless sensing and sensing measurement includes the sensing signal, the first node can send or receive the first signal, which is the sensing signal. Thus, the first node can perform wireless sensing, sensing measurement, etc. based on the first signal.

In another possible implementation, in a case where the signal used for wireless sensing and sensing measurement includes the reflected signal of the sensing signal, the first node can receive the first signal, which is the reflected signal of the sensing signal.

In addition, in this case, the first node can also send the sensing signal.

For example, the first node sends the sensing signal, which is reflected by the target to be measured and generates the first signal as the reflected signal of the sensing signal. The first node receives the first signal and can perform wireless sensing, sensing measurement, etc. based on the first signal.

In another possible implementation, in the case where the signal for wireless sensing and sensing measurement includes the sensing signal and the reflected signal of the sensing signal, the first node receives the first signal, which can be the sensing signal or the reflected signal of the sensing signal.

It can be understood that in the case where the signal used for wireless sensing and sensing measurement includes the sensing signal and the reflected signal of the sensing signal, but the first node only receives the first signal, which is the sensing signal, the first node needs to determine the reflected signal of the first signal.

The first node can obtain the reflected signal of the first signal from other nodes, or can determine the reflected signal of the first signal based on a specific rule, or the first node can receive the reflected signal of the first signal, and so on.

It can be understood that in the case where the signal used for wireless sensing and sensing measurement includes the sensing signal and the reflected signal of the sensing signal, but the first node only receives the first signal, which is the reflected signal of the sensing signal, the first node needs to determine the sensing signal.

The first node can obtain the sensing signal from other nodes, or can determine the sensing signal based on a specific rule, or in the case where the sensing signal is emitted by the first node, the first node can also determine it itself, and so on.

In yet another possible implementation, in the case where the signal for wireless sensing and sensing measurement includes the sensing signal and the reflected signal of the sensing signal, the first node sends the first signal, which may be the sensing signal.

It can be understood that in the case where the signal used for wireless sensing and sensing measurement includes the sensing signal and the reflected signal of the sensing signal, but the first node only sends the first signal, which is the sensing signal, the first node needs to determine the reflected signal of the first signal.

The first node can obtain the reflected signal of the first signal from other nodes, or can determine the reflected signal of the first signal based on a specific rule, or the first node can receive the reflected signal of the first signal, and so on.

It should be noted that the above implementations are only for illustration and do not serve as a specific limitation on the embodiments of the present disclosure.

In some embodiments, receiving the first signal by the first node includes: receiving the first signal sent by the second node, or receiving the first signal obtained from the second signal sent by the second node and then reflected.

In an embodiment of the present disclosure, the first node can receive the first signal sent by the second node, in which the first signal may be the sensing signal.

In a possible implementation, the signal for wireless sensing and sensing measurement may include the sensing signal. The first node receives the first signal sent by the second node, which is the sensing signal. The first node can perform wireless sensing and sensing measurement based on the first signal.

In an embodiment of the present disclosure, the first node can receive the first signal obtained from the second signal sent by the second node and then reflected, where the first signal may be the reflected signal of the sensing signal and the second signal may be the sensing signal.

For example, after the second node sends the second signal, the second signal is reflected by the target to be measured to generate the first signal, and the first node can receive the first signal generated by the second signal reflected by the target to be measured.

In some embodiments, the first node includes at least one of:
a terminal;
a base station;
a centralized unit of a base station (gNB-CU); or
a distributed unit of a base station (gNB-DU).

In an embodiment of the present disclosure, the first node may be a terminal.

In an embodiment of the present disclosure, the first node may be a base station, optionally, including a NG-RAN node, or a gNB.

In an embodiment of the present disclosure, the first node may be a centralized unit of a base station (gNB-CU).

In an embodiment of the present disclosure, the first node may be a distributed unit of a base station (gNB-DU).

In some embodiments, the second node includes at least one of:
a terminal;
a base station;
a gNB-CU;
a gNB-DU;
an SF;
an AMF; or
an LMF.

In an embodiment of the present disclosure, the second node may be at least one of a terminal, a base station, a gNB-CU, a gNB-DU, an SF, an AMF, or an LMF.

S72, determining first information of the first signal and auxiliary information.

In an embodiment of the present disclosure, the first node receives or sends the first signal and can determine the first information of the first signal.

In some embodiments, the first node receives or sends the first signal and can determine the first information carried by the first signal.

In some embodiments, the first node receives or sends the first signal and can determine the first information based on the first signal, such as measuring the first signal to obtain the first information.

In embodiments of the present disclosure, the first node can determine the first information carried by the first signal and/or determine the first information based on the first signal.

In some embodiments, the first information includes at least one of:
a geographical location of an antenna for the first signal;
receiving time of the first signal;
a receiving frequency point of the first signal;
a receiving bandwidth of the first signal;
a receiving phase of the first signal;
a receiving amplitude of the first signal;
a receiving power of the first signal;
polarization information of the first signal;
spatial information of the first signal; or
channel state information of the first signal.

In some embodiments, the first information of the first signal may include, but is not limited to, at least one of the geographic location of the antenna for the first signal, the time, frequency, bandwidth, phase (e.g., angle of departure (AOD)), amplitude, power, polarization information, and/or spatial information (including at least one of the radiation parameters of the transmitting antenna, such as half power lobe width, main lobe width, side lobe level, aspect ratio, and/or directional information).

In an embodiment of the present disclosure, the first node determines the first information of the first signal, in which the first information includes the geographical location of the antenna for the first signal.

In an embodiment of the present disclosure, the first node determines the first information of the first signal, in which the first information includes the receiving time of the first signal.

In an embodiment of the present disclosure, the first node determines the first information of the first signal, in which the first information includes the receiving frequency point of the first signal.

In an embodiment of the present disclosure, the first node determines the first information of the first signal, in which the first information includes the receiving bandwidth of the first signal.

In an embodiment of the present disclosure, the first node determines the first information of the first signal, in which the first information includes the receiving phase of the first signal.

In an embodiment of the present disclosure, the first node determines the first information of the first signal, in which the first information includes the receiving amplitude of the first signal.

In an embodiment of the present disclosure, the first node determines the first information of the first signal, in which the first information includes the receiving power of the first signal.

In an embodiment of the present disclosure, the first node determines the first information of the first signal, in which the first information includes the polarization information of the first signal.

In an embodiment of the present disclosure, the first node determines the first information of the first signal, in which the first information includes the spatial information of the first signal.

In an embodiment of the present disclosure, the first node determines the first information of the first signal, in which the first information includes the channel state information of the first signal.

In embodiments of the present disclosure, the first node can determine the auxiliary information.

In some embodiments, the auxiliary information includes at least one of:
second information of the second signal; or
sensing auxiliary information.

It can be understood that the signal for wireless sensing and sensing measurement can include the sensing signal and the reflected signal of the sensing signal, and in the case where first node receives or sends the first signal, which is the sensing signal, the first node needs to determine the reflected signal of the first signal.

Based on this, in an embodiment of the present disclosure, the first node can determine the auxiliary information, wherein the auxiliary information includes the second information of the second signal, and the second signal may be the reflected signal of the first signal.

The first node determines the auxiliary information including the second information of the second signal, which can be determined from information obtained from other nodes, or can also be determined based on a specific rule, or the first node can determine the second information of the second signal based on the received second signal, and so on.

It can be understood that the signal for wireless sensing and sensing measurement can include the sensing signal and the reflected signal of the sensing signal, and in the case where the first node receives the first signal, which is the reflected signal of the sensing signal, the first node needs to determine the sensing signal.

Based on this, in an embodiment of the present disclosure, the first node can determine the auxiliary information, wherein the auxiliary information includes the second information of the second signal, and the second signal may be the sensing signal.

The first node determines the auxiliary information including the second information of the second signal, which can be determined from information obtained from other nodes, or can also be determined based on a specific rule, or the first node can determine the second information of the second signal based on the received second signal, or the first node can also determine the second information of the second signal based on the second signal it sends, and so on.

In an embodiment of the present disclosure, the auxiliary information includes the sensing auxiliary information.

It can be understood that the sensing auxiliary information can assist the first node in processing the first information of the first signal to generate the sensing measurement result. Alternatively, the sensing auxiliary information can assist the first node in processing the first information of the first signal and the second information of the second signal to generate the sensing measurement result. Alternatively, the sensing auxiliary information can assist the first node in processing the second information of the second signal to generate the sensing measurement result.

In some embodiments, determining the auxiliary information by the first node includes at least one of:
determining the second information of the second signal sent by the first node;
receiving the second signal sent by the second node, and determining the second information of the second signal; or
receiving the second signal sent by a third node, and determining the second information of the second signal.

It can be understood that the signal for wireless sensing and sensing measurement may include the sensing signal and the reflected signal of the sensing signal, and in the case where the first node receives or sends the first signal, which is the sensing signal, the first node needs to determine the reflected signal of the first signal.

Based on this, in an embodiment of the present disclosure, the first node can determine the auxiliary information, wherein the auxiliary information includes the second information of the second signal, and the second signal may be the reflected signal of the first signal.

For example, in an embodiment of the present disclosure, the first node, which determines the auxiliary information including the second information of the second signal, can receive the second signal sent by the second node, and determine the second information of the second signal. The description of the second node can be found in the detailed description of the second node mentioned above, which will not be repeated here.

For example, in an embodiment of the present disclosure, the first node, which determines the auxiliary information including the second information of the second signal, can receive the second signal sent by the third node, and determine the second information of the second signal.

In some embodiments, the first node, which sends the first signal or receives the second signal, can determine the second information carried by the second signal.

In some embodiments, the first node, which sends the first signal or receives the second signal, can determine the second information based on the second signal, for example, measure the second signal to obtain the second information.

In embodiments of the present disclosure, the first node can determine the second information carried by the second signal and/or determine the second information based on the second signal.

In some embodiments, the third node may include at least one of:
a base station;
an SF;
a gNB-CU;
a gNB-DU;
an AMF; or
an LMF.

In embodiments of the present disclosure, the third node may be at least one of a base station, an SF, a gNB-CU, a gNB-DU, an AMF, or an LMF.

It can be understood that the signal for wireless sensing and sensing measurement can include the sensing signal and the reflected signal of the sensing signal, and in the case where the first node receives the first signal, which is the reflected signal of the sensing signal, the first node needs to determine the sensing signal.

Based on this, in an embodiment of the present disclosure, the first node can determine the auxiliary information, wherein the auxiliary information includes the second information of the second signal, and the second signal may be the sensing signal.

For example, in an embodiment of the present disclosure, the first node, which determines the auxiliary information including the second information of the second signal, can determine the second information of the second signal sent by the first node.

For example, in an embodiment of the present disclosure, the first node, which determines the auxiliary information including the second information of the second signal, can receive the second signal sent by the second node, and determine the second information of the second signal. The description of the second node can be found in the detailed description of the second node mentioned above, which will not be repeated here.

For example, in an embodiment of the present disclosure, the first node, which determines the auxiliary information including the second information of the second signal, can receive the second signal sent by the third node, and determine the second information of the second signal. For the description of the third node, please refer to the detailed description of the second node above, which will not be repeated here.

It should be noted that in embodiments of the present disclosure, the second node and the third node may be the same or different, which is not specifically limited in embodiments of the present disclosure.

In some embodiments, the second information includes at least one of:
a geographical location of an antenna for the second signal;
sending time of the second signal;
a sending frequency point of the second signal;
a sending bandwidth of the second signal;
a sending phase of the second signal;
a sending amplitude of the second signal;
a sending power of the second signal;
polarization information of the second signal; or
spatial information of the second signal.

In some embodiments, the second information of the second signal includes, but is not limited to, at least one of the geographical location of the antenna for the second signal, and the time, frequency, bandwidth, phase (e.g. angle of arrival (AOA)), amplitude, power, polarization information, channel state information (e.g. channel state information (CSI), channel quality indicator (CQI), signal to interference plus noise ratio (SINR), signal-to-noise ratio (SNR), etc.), and/or spatial information of the second signal.

In some embodiments, determining the auxiliary information by the first node includes at least one of:
receiving the sensing auxiliary information sent by the second node or the third node.

In an embodiment of the present disclosure, in the case where the auxiliary information includes the sensing auxiliary information, the first node, which determines the auxiliary information, can determine the sensing auxiliary information. The first node can receive the sensing auxiliary information sent by the second node or the third node, and thus determine the sensing auxiliary information.

S73, processing the first information according to the auxiliary information, to generate a sensing measurement result.

In embodiments of the present disclosure, after determining the auxiliary information, the first node can process the first information according to the auxiliary information, to generate the sensing measurement result.

In some embodiments, in the case where the auxiliary information includes the second information of the second signal, processing the first information according to the auxiliary information to generate the sensing measurement result includes: generating an information measurement result according to the first information and/or the second information; and generating the sensing measurement result according to the information measurement result and the sensing auxiliary information.

In embodiments of the present disclosure, the first node can generate the information measurement result according to the first information and/or the second information, and generate the sensing measurement result according to the information measurement result and the sensing auxiliary information.

For example, in the case where the signal used for wireless sensing and sensing measurement includes the sensing signal, the first signal may be the sensing signal. Based on this, the first node can generate the information measurement result based on the first information, and generate the sensing measurement result based on the information measurement result and the sensing auxiliary information.

For example, in the case where the signal used for wireless sensing and sensing measurement includes the reflected signal of the sensing signal, the first signal may be the reflected signal of the sensing signal. Based on this, the first node can generate the information measurement result based on the first information, and generate the sensing measurement result based on the information measurement result and the sensing auxiliary information.

For example, in the case where the signal used for wireless sensing and sensing measurement includes the sensing signal and the reflected signal of the sensing signal, the first signal may be the sensing signal, and the second signal may be the reflected signal of the sensing signal. Based on this, the first node can generate the information measurement result based on the first and second information, and generate the sensing measurement result based on the information measurement result and the sensing auxiliary information.

For example, in the case where the signal used for wireless sensing and sensing measurement includes the sensing signal and the reflected signal of the sensing signal, the second signal may be the sensing signal, and the first signal may be the reflected signal of the sensing signal. Based on this, the first node can generate the information measurement result based on the first and second information, and generate the sensing measurement result based on the information measurement result and the sensing auxiliary information.

In some embodiments, the information measurement result includes a comparison result between the first information and the second information.

In an embodiment of the present disclosure, the first node generates the information measurement result according to the first information and/or the second information, and the information measurement result may include the comparison result between the first information and the second information.

For example, the information measurement result includes the comparison result, which may be at least one of: a phase difference between the first signal and the second signal, or a power difference between the first signal and the second signal, or a time difference between the first signal and the second signal, or a bandwidth difference between the first signal and the second signal, or a frequency difference between the first signal and the second signal, or a frequency offset (such as Doppler frequency offset) between the first signal and the second signal.

In some embodiments, the sensing auxiliary information includes at least one of:
a task target;
information used to determine whether a task target is met; or
a target operation corresponding to a task target.

In an embodiment of the present disclosure, the sensing auxiliary information includes the task target. For example, the task target may be "identifying intrusion", "identifying environment changes", "identifying conflicts", "identifying obstacles", and so on.

In an embodiment of the present disclosure, the sensing auxiliary information includes information used to determine whether the task target is met. The information used to determine whether the task target is met may include information used to determine that the task target is met, or information used to determine that the task target is not met, or information related to determining whether the task target is met, and so on.

In an embodiment of the present disclosure, the sensing auxiliary information includes the target operation corresponding to the task target. The target operation corresponding to the task target may indicate the target operation to be executed when the task target is met.

It can be understood that each task target may correspond to one or more target operations, and one or more target operations may be executed when the task target is met.

In some embodiments, the information used to determine whether the task target is met includes at least one of:
a threshold for judging the information measurement result;
a threshold for judging a change in the information measurement result;
a specific condition for judging a change trend of the information measurement result;
an offset for judging the information measurement result;
a latency for judging the information measurement result;
evaluation time for determining that the information measurement result meets a threshold;
evaluation time for determining that the information measurement result meets a specific condition;
window time used to process the information measurement result;
a signal identification for evaluating the information measurement result;
a path identification for evaluating the information measurement result; or
a number of signals for evaluating the information measurement result.

In an embodiment of the present disclosure, the information used to determine whether the task target is met includes the threshold for judging the information measurement result. For example, if the information measurement result is greater than or less than or equal to the threshold, it can be determined that the task target is met.

In an embodiment of the present disclosure, the information used to determine whether the task target is met includes the threshold for judging the change in the information measurement result. For example, if the change in the information measurement result is greater than or less than or equal to the threshold, it can be determined that the task target is met.

In an embodiment of the present disclosure, the information used to determine whether the task target is met includes the specific condition for judging the change trend of the information measurement result. For example, if the information measurement result changes proportionally over time or frequency points, or changes in a specific pattern, or changes in a specific matrix, it can be determined that the task target is met.

In an embodiment of the present disclosure, the information used to determine whether the task target is met includes the offset for judging the information measurement result. For example, if the change in the information measurement result is greater than or less than or equal to the threshold plus the offset, it can be determined that the task target is met.

In an embodiment of the present disclosure, the information used to determine whether the task target is met includes the latency for judging the information measurement result. For example, if the change in the information measurement result is greater than or less than or equal to the threshold plus or minus the latency, it can be determined that the task target is met.

In an embodiment of the present disclosure, the information used to determine whether the task target is met includes the evaluation time for determining that the information measurement result meets the threshold. For example, if the information measurement result meets the above threshold, or meets the threshold plus the offset, or meets the threshold plus the latency, and its duration reaches the evaluation time, it can be determined that the task target is met.

In an embodiment of the present disclosure, the information used to determine whether the task target is met includes the evaluation time for determining that the information measurement result meets the specific condition. For example, if the information measurement result meets the specific condition, and its duration reaches the evaluation time, it can be determined that the task target is met.

In an embodiment of the present disclosure, the information used to determine whether the task target is met includes the window time used to process the information measurement result. For example, the window time is specified, and the information measurement result is judged based on the information measurement result within the window time.

In an embodiment of the present disclosure, the information used to determine whether the task target is met includes the signal identification for evaluating the information measurement result. For example, the first node can evaluate the changes or change trends of the signal measurement results through multiple first signals at different times or with different parameters, or first signals with different transmission and reception modes. When the signal measurement results or changes in the signal measurement results of the first signals corresponding to the signal identification all reach the threshold, or when the change trends of the signal measurement results of the first signals corresponding to the signal identification all reach the specific condition, it can be determined that the task target is met.

In an embodiment of the present disclosure, the information used to determine whether the task target is met includes the path identification for evaluating the information measurement result. For example, the first node can evaluate the changes or change trends of signal measurement results through the same first signal from different paths. When the signal measurement results or changes in the signal measurement results of the same first signal from different paths all reach the threshold, or when the change trends of signal measurement results of the same first signal from different paths all reach the specific condition, it can be determined that the task target is met.

In an embodiment of the present disclosure, the information used to determine whether the task target is met includes the number of signals for evaluating the information measurement result. For example, the signal measurement results obtained in the unit of window time can be determined to meet the task target when the number of signals whose signal measurement results or changes in the signal measurement results meet the threshold within the window time reaches the number threshold, or when the number of signals whose change trends of the signal measurement results meet the specific condition within the window time reaches the number threshold.

For example, the threshold for the number of signals is 5. When there are 5 signals within the window time whose signal measurement results or changes in the signal measurement results meet the threshold, or there are 5 signals within the window time whose change trends of signal measurement results meets the specific condition, it can be determined that the task target is met.

Of course, the first node can also evaluate the signal measurement results through multiple first signals or the same first signal from different paths. When a certain number of signals meet the criterion, it can be determined that the task target is met.

In an illustrative embodiment, in water level monitoring, when the sensing signal emitted by the transmitting end encounters the surface of the measured medium (e.g. water surface), the emitted sensing signal is reflected to form an echo and transmitted along a fixed path to the receiving end (e.g. first node). Due to the fact that the distance from the transmitting end to the receiving end through the surface of the measured medium is proportional to the propagation time of the signal between them, the water level change information (i.e. transmission path change) can be obtained by calculating the time difference between the sending and receiving of the sensing signal. In this embodiment, the 'measurement result' is the 'time difference between sent and received signals'. If the time difference measured within the N^{th} 'window time' is k and the time difference measured within the (N+1)^{th} 'window time' is (k+1), then the change in the measurement result is k minus (k+1). If the change in the measurement result is greater than the 'threshold for judging the change in the measurement result', it can be considered that the task target is met, and the first node can broadcast the 'water level alarm' message.

In an illustrative embodiment, in indoor intrusion detection, when the indoor environment is unmanned, the sensing signal sent by the transmitting end is received by the receiving end (such as the first node), and its channel state (such as channel quality indicator (CQI)) does not experience significant fluctuations; when an intruder appears indoors, the moving human body can cause signal scattering, attenuation, and energy loss, resulting in significant fluctuations in the channel state (such as CQI) of the received signal. In this embodiment, the "measurement result" is the "channel state of the received signal". If the average channel state measured within the N^{th} "window time" is lower than the "threshold used to judge the measurement value result" or if the instantaneous channel state continues to be lower than the "threshold used to judge the measurement value result" during the "evaluation time", it can be considered as "confirmed intrusion" and "intrusion alarm" and/or "more accurate intrusion detection" can be executed.

In some embodiments, generating the sensing measurement result by the first node according to the information measurement result and the sensing auxiliary information includes: in response to determining that the information measurement result meets the task target according to the information used to determine whether the task target is met, generating the sensing measurement result, wherein the sensing measurement result is used to indicate performing the target operation corresponding to the task target.

In an embodiment of the present disclosure, the first node can generate the sensing measurement result in the case of determining that the information measurement result meets the task target according to the information used to determine whether the task target is met. The sensing measurement result is used to indicate performing the target operation corresponding to the task target.

In some embodiments, the first node performs the relevant operation based on the sensing measurement result.

In an embodiment of the present disclosure, the first node can perform the relevant operation based on the sensing measurement result after obtaining the sensing measurement result.

For example, in the scenario of house intrusion detection, if the sensing measurement result shows that there is no intruder, the operation of keeping the state unchanged can be performed, or if the sensing measurement result shows that there is an intruder, a notification can be sent to the node (such as the terminal or alarm device of the house owner) to remind of the intruder.

For example, in a flood detection scenario, if the sensing measurement result shows that there is no flood in a specific area, the operation of keeping the state unchanged can be performed, or if the sensing measurement result shows that there is a flood in a specific area, a notification can be sent to the node (such as the terminal of the user in the specific area) to remind that there is a flood.

In some embodiments, the first node performs the target operation corresponding to the task target according to the sensing measurement result.

In embodiments of the present disclosure, the first node determines the target operation corresponding to the task target indicated by the sensing measurement result after generating the sensing measurement result, and then executes the target operation corresponding to the task target. As a result, the first node can quickly obtain the sensing measurement result, which can improve the efficiency of sensing solution processing and application, reduce latency, and save signaling overhead.

In some embodiments, performing the target operation corresponding to the task target by the first node includes at least one of:
indicating the task target to an application layer;
sending indication information of the task target to a second node;
sending indication information of the task target to a third node;
sending indication information of the task target to a fourth node; or
broadcasting indication information of the task target.

In an embodiment of the present disclosure, the first node performs the target operation corresponding to the task target, including indicating the task target to the application layer. The first node may be a terminal, which can perform the target operation corresponding to the task target based on the implementation.

In an embodiment of the present disclosure, the first node performs the target operation corresponding to the task target, including sending indication information of the task target to the second node.

In an embodiment of the present disclosure, the first node performs the target operation corresponding to the task target, including sending indication information of the task target to the third node.

In an embodiment of the present disclosure, the first node performs the target operation corresponding to the task target, including sending indication information of the task target to a fourth node. For example, the first node is a base station, and the fourth node is a sensing control node or sensing data collection node (such as a base station, terminal, SF, LMF, or AMF). The first node can send the indication information of the task target (such as intrusion alarm, flood alarm, etc.) to the fourth node through signaling or user data.

In an embodiment of the present disclosure, the first node performs the target operation corresponding to the task target, including broadcasting the indication information of the task target.

For example, the first node is a base station and the fourth node is a terminal. The first node can send the indication information of the task target (such as intrusion alarms, flood alarms, etc.) to the terminal through broadcasting.

In some embodiments, the fourth node includes at least one of:
a base station;
a terminal;
an SF;
an LMF; or
an AMF.

In an embodiment of the present disclosure, the fourth node may be at least one of a base station, a terminal, an SF, an LMF or an AMF.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the first node receives or sends the first signal; determines the first information of the first signal and auxiliary information; processes the first information based on the auxiliary information to generate the sensing measurement result. Thus, the first node can quickly process the first information based on the auxiliary information, to obtain the sensing measurement result, improving the efficiency of sensing solution processing, reducing latency, and saving signaling overhead.

Please refer to Fig. 8, which is a flowchart of another local measurement processing method provided in an embodiment of the present disclosure. It should be noted that the local measurement processing method in this embodiment may be performed by a first node. As shown in Fig. 8, the method may include, but is not limited to, the following steps.

S81, receiving or sending a first signal.

S82, determining first information of the first signal, and auxiliary information.

S83, processing the first information according to the auxiliary information, to generate a sensing measurement result.

The relevant descriptions of S81 to S83 can refer to the relevant descriptions in the above embodiments, which will not be repeated here.

S84, performing a relevant operation according to the sensing measurement result.

In an embodiment of the present disclosure, the first node can perform the relevant operation based on the sensing measurement result after obtaining the sensing measurement result.

For example, in the scenario of house intrusion detection, if the sensing measurement result shows that there is no intruder, the operation of keeping the state unchanged can be performed, or if the sensing measurement result shows that there is an intruder, a notification can be sent to the node (such as the terminal of the owner of the house) to remind of the intruder.

For example, in a flood detection scenario, if the sensing measurement result shows that there is no flood in a specific area, the operation of keeping the state unchanged can be performed, or if the sensing measurement result shows that there is a flood in a specific area, a notification can be sent to the node (such as the terminal of the user in the specific area) to remind that there is a flood.

It should be noted that the relevant descriptions of the first node, first signal, first information, and auxiliary information can refer to the relevant descriptions in the above embodiments, which will not be repeated here.

It should be noted that in embodiments of the present disclosure, S81 to S84 can be implemented separately or in combination with any other step in the embodiments of the present disclosure, such as S71 to S73, which is not limited in embodiments of the present disclosure.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the first node receives or sends the first signal; determines the first information of the first signal and auxiliary information; processes the first information based on the auxiliary information to generate the sensing measurement result. Thus, the first node can quickly process the first information based on the auxiliary information, to obtain the sensing measurement result, improving the efficiency of sensing solution processing, reducing latency, and saving signaling overhead.

Please refer to Fig. 9a, which is a flowchart of an information determining method provided in an embodiment of the present disclosure. It should be noted that the information determining method in this embodiment may be performed by a first node. As shown in Fig. 9a, the method may include but is not limited to the following steps.

S91a, receiving a first signal sent by a second node.

S92a, determining first information of the first signal.

The first signal may be a sensing signal.

In an embodiment of the present disclosure, the first node receives the first signal sent by the second node, determines the first information of the first signal. In the case where the first signal is the sensing signal, the first node can determine information of the sensing signal.

In an embodiment of the present disclosure, in the case where the signal used for wireless sensing and sensing measurement includes the sensing signal, the first node determines the first information of the first signal, and the first signal is the sensing signal. Therefore, the first node can perform wireless sensing and sensing measurement based on the first information of the first signal.

The relevant descriptions of the first node, the second node and the first information of the first signal can refer to the relevant descriptions in the above embodiments, which will not be repeated here.

It should be noted that in embodiments of the present disclosure, S91a to S91b can be implemented separately or in combination with any other step in the embodiments of the present disclosure, such as S71 to S73 and/or S81 to S84, which is not limited in embodiments of the present disclosure.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the first node receives the first signal sent by the second node, and determines the first information of the first signal. Therefore, in the case where the signal used for wireless sensing and sensing measurement includes the sensing signal, the first node determines the first information of the first signal, and the first signal is the sensing signal, and the first node can perform wireless sensing and sensing measurement according to the first information of the first signal.

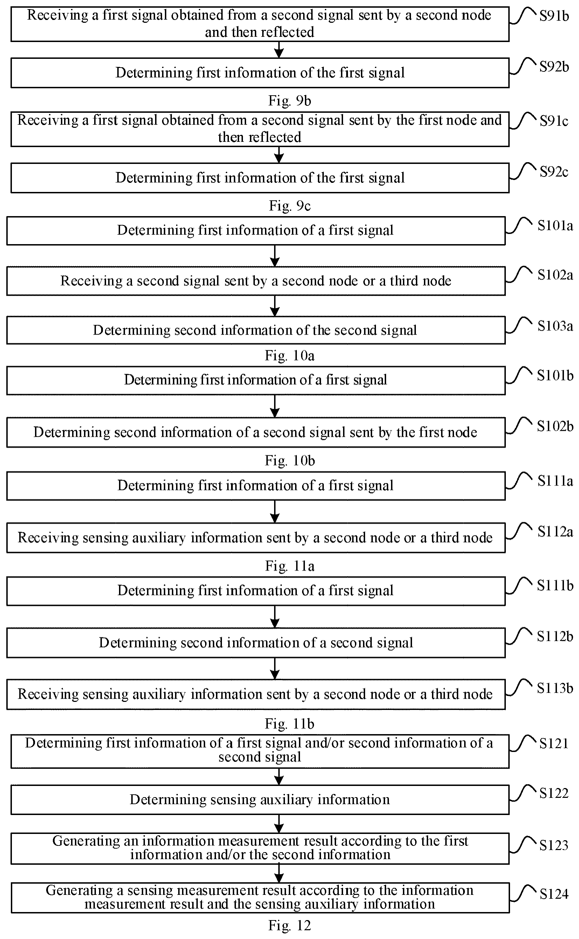

Please refer to Fig. 9b, which is a flowchart of another information determining method provided in an embodiment of the present disclosure. It should be noted that the information determining method in this embodiment may be performed by a first node. As shown in Fig. 9b, the method may include but is not limited to the following steps.

S91b, receiving a first signal obtained from a second signal sent by a second node and then reflected.

S92b, determining first information of the first signal.

The second signal may be a sensing signal, and the first signal is a reflected signal of the sensing signal.

In an embodiment of the present disclosure, the first node receives the first signal obtained from the second signal sent by the second node and then reflected, and determines the first information of the first signal. In the case where the first signal is the reflected signal of the sensing signal, the first node can determine the information of the reflected signal of the sensing signal.

In an embodiment of the present disclosure, in the case where the signal used for wireless sensing and sensing measurement includes the reflected signal of the sensing signal, the first node determines the first information of the first signal, and the first signal is the reflected signal of the sensing signal, and thus the first node can perform wireless sensing and sensing measurement according to the first information of the first signal.

The relevant descriptions of the first node, the second node, the first information of the first signal and the second signal can refer to the relevant descriptions in the above embodiments, which will not be repeated here.

It should be noted that in embodiments of the present disclosure, S91b to S91b can be implemented separately or in combination with any other step in the embodiments of the present disclosure, such as S71 to S73 and/or S81 to S84, which is not limited in embodiments of the present disclosure.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the first node receives the first signal obtained from the second signal sent by the second node and then reflected, and determines the first information of the first signal. Therefore, in the case where the signal used for wireless sensing and sensing measurement includes the reflected signal of the sensing signal, the first node determines the first information of the first signal, and the first signal is the reflected signal of the sensing signal, and the first node can perform wireless sensing and sensing measurement according to the first information of the first signal.

Please refer to Fig. 9c, which is a flowchart of yet another information determining method provided in an embodiment of the present disclosure. It should be noted that the information determining method in this embodiment may be performed by a first node. As shown in Fig. 9c, the method may include but is not limited to the following steps.

S91c, receiving a first signal obtained from a second signal sent by the first node and then reflected.

S92c, determining first information of the first signal.

The second signal may be a sensing signal, and the first signal is a reflected signal of the sensing signal.

In an embodiment of the present disclosure, the first node sends the second signal, and then the first signal obtained from the second signal being reflected is received by the first node.

In an embodiment of the present disclosure, in the case where the signal used for wireless sensing and sensing measurement includes the reflected signal of the sensing signal, the first node receives the first signal obtained from the second signal sent by the first node and then reflected, wherein the first signal is the reflected signal of the sensing signal, and thus the first node can perform wireless sensing and sensing measurement according to the first information of the first signal.

In an embodiment of the present disclosure, in the case where the signal used for wireless sensing and sensing measurement includes the sensing signal and the reflected signal of the sensing signal, the first node receives the first signal obtained from the second signal sent by the first node and then reflected, wherein the first signal is the reflected signal of the sensing signal, and the second signal is the sensing signal, and thus the first node can perform wireless sensing and sensing measurement according to the first information of the first signal and the second signal.

The relevant descriptions of the first node, the second node, the first information of the first signal and the second signal can refer to the relevant descriptions in the above embodiments, which will not be repeated here.

It should be noted that in embodiments of the present disclosure, S91c to S91c can be implemented separately or in combination with any other step in the embodiments of the present disclosure, such as S71 to S73 and/or S81 to S84, which is not limited in embodiments of the present disclosure.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the first node receives the first signal obtained from the second signal sent by the first node and then reflected, and determines the first information of the first signal. Therefore, in the case where the signal used for wireless sensing and sensing measurement includes the reflected signal of the sensing signal, the first node determines the first information of the first signal, and the first signal is the reflected signal of the sensing signal, and the first node can perform wireless sensing and sensing measurement according to the first information of the first signal; in the case where the signal for wireless sensing and sensing measurement includes the sensing signal and the reflected signal of the sensing signal, the first node sends the second signal, which is the sensing signal, and the first node determines the first information of the first signal, wherein the first signal is the reflected signal of the sensing signal, and the first node can perform wireless sensing and sensing measurement based on the first information of the first signal and the second signal.

Please refer to Fig. 10a, which is a flowchart of yet another information determining method provided in an embodiment of the present disclosure. It should be noted that the information determining method in this embodiment may be performed by a first node. As shown in Fig. 10a, the method may include but is not limited to the following steps.

S101a, determining first information of a first signal.

S102a, receiving a second signal sent by a second node or a third node.

S103a, determining second information of the second signal.

In an embodiment of the present disclosure, in the case where the signal used for wireless sensing and sensing measurement includes the sensing signal and the reflected signal of the sensing signal, the first node determines the first information of the first signal, and in the case where the first information is the reflected signal of the sensing signal, the first node can also receive the second signal sent by the second node or the third node, wherein the second signal may be the sensing signal.

Based on this, the first node can determine the second information of the second signal, and thus the first node can perform wireless sensing and sensing measurement based on the first information of the first signal and the second information of the second signal.

In an embodiment of the present disclosure, in the case where the signal used for wireless sensing and sensing measurement includes the sensing signal and the reflected signal of the sensing signal, the first node determines the first information of the first signal, and in the case where the first signal is the sensing signal, the first node can also receive the second signal sent by the second node or the third node, wherein the second signal may be the reflected signal of the sensing signal.

Based on this, the first node can determine the second information of the second signal, and thus the first node can perform wireless sensing and sensing measurement according to the first information of the first signal and the second information of the second signal.

The relevant descriptions of the first node, the second node, the third node, the first information of the first signal and the second information of the second signal can refer to the relevant descriptions in the above embodiments, which will not be repeated here.

The method for the first node to determine the first information of the first signal can refer to the relevant descriptions in the above embodiments, which will not be repeated here.

It should be noted that in embodiments of the present disclosure, S101a to S103a can be implemented separately or in combination with any other step in the embodiments of the present disclosure, such as S71 to S73 and/or S81 to S84 and/or S91a to S92a and/or S91b to S92b and/or S91c to S92c, which is not limited in embodiments of the present disclosure.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the first node determines the first information of the first signal, receives the second signal sent by the second node or the third node, and determines the second information of the second signal. Therefore, in the case where the signal used for wireless sensing and sensing measurement includes the sensing signal and the reflected signal of the sensing signal, the first node determines the first information of the first signal, and in the case where the first signal is the reflected signal of the sensing signal, can determine the second information of the second signal as the sensing signal, or in the case where the first signal is the sensing signal, can determine the second information of the second signal as the reflected signal of the sensing signal, and the first node can perform wireless sensing and sensing measurement based on the first information of the first signal and the second information of the second signal.

Please refer to Fig. 10b, which is a flowchart of yet another information determining method provided in an embodiment of the present disclosure. It should be noted that the information determining method in this embodiment may be performed by a first node. As shown in Fig. 10b, the method may include but is not limited to the following steps.

S101b, determining first information of a first signal.

S102b, determining second information of a second signal sent by the first node.

In an embodiment of the present disclosure, in the case where the signal used for wireless sensing and sensing measurement includes a sensing signal and a reflected signal of the sensing signal, the first node determines the first information of the first signal, and in the case where the first signal is the reflected signal of the sensing signal, the first node can also determine the second information of the second signal sent by the first node, wherein the second signal may be the sensing signal.

Based on this, the first node can determine the second information of the second signal, and thus the first node can perform wireless sensing and sensing measurement according to the first information of the first signal and the second information of the second signal.

In an embodiment of the present disclosure, in the case where the signal used for wireless sensing and sensing measurement includes the sensing signal and the reflected signal of the sensing signal, the first node determines the first information of the first signal, and in the case where the first signal is the sensing signal, the first node can also determine the second information of the second signal sent by the first node, wherein the second signal may be the reflected signal of the sensing signal.

Based on this, the first node can determine the second information of the second signal, and thus the first node can perform wireless sensing and sensing measurement according to the first information of the first signal and the second information of the second signal.

The relevant descriptions of the first node, the first information of the first signal and the second information of the second signal can refer to the relevant descriptions in the above embodiments, which will not be repeated here.

The method for the first node to determine the first information of the first signal can refer to the relevant descriptions in the above embodiments, which will not be repeated here.

It should be noted that in embodiments of the present disclosure, S101b to S102b can be implemented separately or in combination with any other step in the embodiments of the present disclosure, such as S71 to S73 and/or S81 to S84 and/or S91a to S92a and/or S91b to S92b and/or S91c to S92c, which is not limited in embodiments of the present disclosure.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the first node determines the first information of the first signal, and determines the second information of the second signal. Therefore, in the case where the signal used for wireless sensing and sensing measurement includes the sensing signal and the reflected signal of the sensing signal, the first node determines the first information of the first signal, and in the case where the first signal is the reflected signal of the sensing signal, can determine the second information of the second signal as the sensing signal, or in the case where the first signal is the sensing signal, can determine the second information of the second signal as the reflected signal of the sensing signal, and the first node can perform wireless sensing and sensing measurement based on the first information of the first signal and the second information of the second signal.

Please refer to Fig. 11a, which is a flowchart of yet another information determining method provided in an embodiment of the present disclosure. It should be noted that the information determining method in this embodiment may be performed by a first node. As shown in Fig. 11a, the method may include but is not limited to the following steps.

S111a, determining first information of a first signal.

S112a, receiving sensing auxiliary information sent by a second node or a third node.

In an embodiment of the present disclosure, S112a may be performed before S111a.

In an embodiment of the present disclosure, in the case where the signal used for wireless sensing and sensing measurement includes a sensing signal, the first signal may be the sensing signal, and the first node can also receive the sensing auxiliary information sent by the second node or the third node. Based on this, the first node can determine the information measurement result according to the first information, and further generate the sensing measurement result according to the information measurement result and the sensing auxiliary information, thereby improving the efficiency of sensing solution processing, reducing latency, and saving signaling overhead.

In an embodiment of the present disclosure, in the case where the signal used for wireless sensing and sensing measurement includes the reflected signal of the sensing signal, the first signal may be the reflected signal of the sensing signal, and the first node can also receive the sensing auxiliary information sent by the second node or the third node. Based on this, the first node can determine the information measurement result according to the first information, and further generate the sensing measurement result according to the information measurement result and the sensing auxiliary information, thereby improving the efficiency of sensing solution processing, reducing latency, and saving signaling overhead.

The relevant descriptions of the first node, the second node, the third node and the first information of the first signal can refer to the relevant descriptions in the above embodiments, which will not be repeated here.

The method for the first node to determine the first information of the first signal can refer to the relevant descriptions in the above embodiments, which will not be repeated here.

It should be noted that in embodiments of the present disclosure, S111a to S112a can be implemented separately or in combination with any other step in the embodiments of the present disclosure, such as S71 to S73 and/or S81 to S84 and/or S91a to S92a and/or S91b to S92b and/or S91c to S92c and/or S101a to S103a and/or S101b to S102b, which is not limited in embodiments of the present disclosure.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the first node determines the first information of the first signal, and receives the sensing auxiliary information sent by the second node or the third node. Therefore, the first node can determine the first information of the first signal and the sensing auxiliary information, and the first node can determine the information measurement result according to the first information, and further generate the sensing measurement information according to the information measurement result and the sensing auxiliary information, thereby improving the efficiency of sensing solution processing, reducing latency, and saving signaling overhead.

Please refer to Fig. 11b, which is a flowchart of yet another information determining method provided in an embodiment of the present disclosure. It should be noted that the information determining method in this embodiment may be performed by a first node. As shown in Fig. 11b, the method may include but is not limited to the following steps.

S111b, determining first information of a first signal.

S112b, determining second information of a second signal.

S113b, receiving sensing auxiliary information sent by a second node or a third node.

In an embodiment of the present disclosure, S113b may be performed before S112b or S111b, and S112b may be performed before S111b.

In an embodiment of the present disclosure, in the case where the signal used for wireless sensing and sensing measurement includes a sensing signal and a reflected signal of the sensing signal, the first signal may be the sensing signal, and the second signal may be the reflected signal of the sensing signal, and the first node can also receive the sensing auxiliary information sent by the second node or the third node. Based on this, the first node can determine the information measurement result according to the first information and the second information, and further generate the sensing measurement result according to the information measurement result and the sensing auxiliary information, thereby improving the efficiency of sensing solution processing, reducing latency, and saving signaling overhead.

In an embodiment of the present disclosure, in the case where the signal used for wireless sensing and sensing measurement includes the sensing signal and the reflected signal of the sensing signal, the first signal may be the reflected signal of the sensing signal, and the second signal may be the sensing signal, and the first node can also receive the sensing auxiliary information sent by the second node or the third node. Based on this, the first node can determine the information measurement result according to the first information and the second information, and further generate the sensing measurement result according to the information measurement result and the sensing auxiliary information, thereby improving the efficiency of sensing solution processing, reducing latency, and saving signaling overhead.

The relevant descriptions of the first node, the second node, the third node, the first information of the first signal and the second information of the second signal can refer to the relevant descriptions in the above embodiments, which will not be repeated here.

The method for the first node to determine the first information of the first signal and the method for determining the second information of the second signal can refer to the relevant descriptions in the above embodiments, which will not be repeated here.

It should be noted that in embodiments of the present disclosure, S111b to S113b can be implemented separately or in combination with any other step in the embodiments of the present disclosure, such as S71 to S73 and/or S81 to S84 and/or S91a to S92a and/or S91b to S92b and/or S91c to S92c and/or S101a to S103a and/or S101b to S102b, which is not limited in embodiments of the present disclosure.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the first node determines the first information of the first signal, determines the second information of the second signal, and receives the sensing auxiliary information sent by the second node or the third node. Therefore, the first node can determine the first information of the first signal and the sensing auxiliary information, and the first node can determine the information measurement result according to the first information and the second information, and further generate the sensing measurement information according to the information measurement result and the sensing auxiliary information, thereby improving the efficiency of sensing solution processing, reducing latency, and saving signaling overhead.

Please refer to Fig. 12, which is a flowchart of yet another local measurement processing method provided in an embodiment of the present disclosure. It should be noted that the local measurement processing method in this embodiment may be performed by a first node. As shown in Fig. 12, the method may include but is not limited to the following steps.

S121, determining first information of a first signal and/or second information of a second signal.

In an embodiment of the present disclosure, the method for the first node to determine the first information of the first signal can refer to the relevant descriptions in the above embodiments, which will not be repeated here.

In an embodiment of the present disclosure, the method for the first node to determine the second information of the second signal can refer to the relevant descriptions in the above embodiments, which will not be repeated here.

S122, determining sensing auxiliary information.

In an embodiment of the present disclosure, the method for the first node to determine the sensing auxiliary information can refer to the relevant descriptions in the above embodiments, which will not be repeated here.

In an embodiment of the present disclosure, S122 may be performed before S 121.

S123, generating an information measurement result according to the first information and/or the second information.

For example, the signal used for wireless sensing and sensing measurement may include the sensing signal, and the first node can generate the information measurement result according to the sensing signal (first signal), and generate the sensing measurement result according to the information measurement result and the sensing auxiliary information.

For example, the signal used for wireless sensing and sensing measurement may include the sensing signal and the reflected signal of the sensing signal, and the first node can generate the information measurement result according to the reflected signal of the sensing signal (first signal), and generate the sensing measurement result according to the information measurement result and the sensing auxiliary information.

For example, the signal used for wireless sensing and sensing measurement may include the sensing signal and the reflected signal of the sensing signal, and the first node can generate the information measurement result according to the sensing signal and the reflected signal of the sensing signal (first signal and second signal), and generate the sensing measurement result according to the information measurement result and the sensing auxiliary information.

In some embodiments, the information measurement result includes a comparison result between the first information and the second information.

In an embodiment of the present disclosure, the first node generates the information measurement result according to the first information and/or the second information, and the information measurement result may include the comparison result between the first information and the second information.

For example, the information measurement result includes the comparison result, which may be at least one of: a phase difference between the first signal and the second signal, or a power difference between the first signal and the second signal, or a time difference between the first signal and the second signal, or a bandwidth difference between the first signal and the second signal, or a frequency difference between the first signal and the second signal, or a frequency offset (such as Doppler frequency offset) between the first signal and the second signal.

In some embodiments, the sensing auxiliary information includes at least one of:
a task target;
information used to determine whether a task target is met; or
a target operation corresponding to a task target.

In an embodiment of the present disclosure, the sensing auxiliary information includes the task target. For example, the task target may be "identifying intrusion", "identifying environment changes", "identifying conflicts", "identifying obstacles", and so on.

In an embodiment of the present disclosure, the sensing auxiliary information includes information used to determine whether the task target is met. The information used to determine whether the task target is met may include information used to determine that the task target is met, or information used to determine that the task target is not met, or information related to determining whether the task target is met, and so on.

In an embodiment of the present disclosure, the sensing auxiliary information includes the target operation corresponding to the task target. The target operation corresponding to the task target may indicate the target operation to be executed when the task target is met.

It can be understood that each task target may correspond to one or more target operations, and one or more target operations may be executed when the task target is met.

In some embodiments, the information used to determine whether the task target is met includes at least one of:
a threshold for judging the information measurement result;
a threshold for judging a change in the information measurement result;
a specific condition for judging a change trend of the information measurement result;
an offset for judging the information measurement result;
a latency for judging the information measurement result;
evaluation time for determining that the information measurement result meets a threshold;
evaluation time for determining that the information measurement result meets a specific condition;
window time used to process the information measurement result;
a signal identification for evaluating the information measurement result;
a path identification for evaluating the information measurement result;
a number of signals for evaluating the information measurement result; or
amount of data for evaluating the information measurement result.

In an embodiment of the present disclosure, the information used to determine whether the task target is met includes the threshold for judging the information measurement result. For example, if the information measurement result is greater than or less than or equal to the threshold, it can be determined that the task target is met.

In an embodiment of the present disclosure, the information used to determine whether the task target is met includes the threshold for judging the change in the information measurement result. For example, if the change in the information measurement result is greater than or less than or equal to the threshold, it can be determined that the task target is met.

In an embodiment of the present disclosure, the information used to determine whether the task target is met includes the specific condition for judging the change trend of the information measurement result. For example, if the information measurement result changes proportionally over time or frequency points, or changes in a specific pattern, or changes in a specific matrix, it can be determined that the task target is met.

In an embodiment of the present disclosure, the information used to determine whether the task target is met includes the offset for judging the information measurement result. For example, if the change in the information measurement result is greater than or less than or equal to the threshold plus the offset, it can be determined that the task target is met.

In an embodiment of the present disclosure, the information used to determine whether the task target is met includes the latency for judging the information measurement result. For example, if the change in the information measurement result is greater than or less than or equal to the threshold plus or minus the latency, it can be determined that the task target is met.

In an embodiment of the present disclosure, the information used to determine whether the task target is met includes the evaluation time for determining that the information measurement result meets the threshold. For example, if the information measurement result meets the above threshold, or meets the threshold plus the offset, or meets the threshold plus the latency, and its duration reaches the evaluation time, it can be determined that the task target is met.

In an embodiment of the present disclosure, the information used to determine whether the task target is met includes the evaluation time for determining that the information measurement result meets the specific condition. For example, if the information measurement result meets the specific condition, and its duration reaches the evaluation time, it can be determined that the task target is met.

In an embodiment of the present disclosure, the information used to determine whether the task target is met includes the window time used to process the information measurement result. For example, the window time is specified, and the information measurement result is judged based on the information measurement result within the window time.

In an embodiment of the present disclosure, the information used to determine whether the task target is met includes the signal identification for evaluating the information measurement result. For example, the first node can evaluate the changes or change trends of the signal measurement results through multiple first signals at different times or with different parameters, or first signals with different transmission and reception modes. When the signal measurement results or changes in the signal measurement results of the first signals corresponding to the signal identification all reach the threshold, or when the change trends of the signal measurement results of the first signals corresponding to the signal identification all reach the specific condition, it can be determined that the task target is met.

In an embodiment of the present disclosure, the information used to determine whether the task target is met includes the path identification for evaluating the information measurement result. For example, the first node can evaluate the changes or change trends of signal measurement results through the same first signal from different paths. When the signal measurement results or changes in the signal measurement results of the same first signal from different paths all reach the threshold, or when the change trends of signal measurement results of the same first signal from different paths all reach the specific condition, it can be determined that the task target is met.

In an embodiment of the present disclosure, the information used to determine whether the task target is met includes the number of signals for evaluating the information measurement result. For example, the signal measurement results obtained in the unit of window time can be determined to meet the task target when the number of signals whose signal measurement results or changes in the signal measurement results meet the threshold within the window time reaches the number threshold, or when the number of signals whose change trends of the signal measurement results meet the specific condition within the window time reaches the number threshold.

For example, the threshold for the number of signals is 5. When there are 5 signals within the window time whose signal measurement results or changes in the signal measurement results meet the threshold, or there are 5 signals within the window time whose change trends of signal measurement results meets the specific condition, it can be determined that the task target is met.

Of course, the first node can also evaluate the signal measurement results through multiple first signals or the same first signal from different paths. When a certain number of signals meet the criterion, it can be determined that the task target is met.

In an illustrative embodiment, in water level monitoring, when the sensing signal emitted by the transmitting end encounters the surface of the measured medium (e.g. water surface), the emitted sensing signal is reflected to form an echo and transmitted along a fixed path to the receiving end (e.g. first node). Due to the fact that the distance from the transmitting end to the receiving end through the surface of the measured medium is proportional to the propagation time of the signal between them, the water level change information (i.e. transmission path change) can be obtained by calculating the time difference between the sending and receiving of the sensing signal. In this embodiment, the 'measurement result' is the 'time difference between sending and receiving signals'. If the time difference measured within the N^{th} 'window time' is k and the time difference measured within the (N+1)^{th} 'window time' is (k+1), then the change in the measurement result is k minus (k+1). If the change in the measurement result is greater than the 'threshold for judging the change in the measurement result', it can be considered that the task target is met, and the first node can broadcast the 'water level alarm' message.

In an illustrative embodiment, in indoor intrusion detection, when the indoor environment is unmanned, the sensing signal sent by the transmitting end is received by the receiving end (such as the first node), and its channel state (such as channel quality indicator (CQI)) does not experience significant fluctuations; when an intruder appears indoors, the moving human body can cause signal scattering, attenuation, and energy loss, resulting in significant fluctuations in the channel state (such as CQI) of the received signal. In this embodiment, the "measurement result" is the "channel state of the received signal". If the average channel state measured within the N^{th} "window time" is lower than the "threshold used to judge the measurement value result" or if the instantaneous channel state continues to be lower than the "threshold used to judge the measurement value result" during the "evaluation time", it can be considered as "confirmed intrusion" and "intrusion alarm" and/or "more accurate intrusion detection" can be executed.

S124, generating a sensing measurement result according to the information measurement result and the sensing auxiliary information.

In an embodiment of the present disclosure, the first node, which generates the sensing measurement result according to the information measurement result and the sensing auxiliary information, can generate the sensing measurement result in the case of determining that the information measurement result meets the task target according to the information used to determine whether the task target is met, wherein the sensing measurement result is used to indicate performing the target operation corresponding to the task target.

It should be noted that the relevant descriptions of the first node, the first signal, the first information, the second signal, the second information and the sensing auxiliary information can refer to the relevant descriptions in the embodiments above, which will not be repeated here.

It should be noted that in embodiments of the present disclosure, S121 to S124 can be implemented separately or in combination with any other step in the embodiments of the present disclosure, such as S71 to S73 and/or S81 to S84 and/or S91a to S92a and/or S91b to S92b and/or S91c to S92c and/or S101a to S103a and/or S101b to S 102b and/or S111a to S112a and/or S111b to S113b, which is not limited in embodiments of the present disclosure.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the first node determines the first information of the first signal and/or the second information of the second signal, determines the sensing auxiliary information, generates the information measurement result according to the first information and/or the second information, and generates the sensing measurement result according to the information measurement result and the sensing auxiliary information. Therefore, the first node can quickly obtain the sensing measurement result, thereby improving the efficiency of sensing solution processing, reducing latency, and saving signaling overhead.

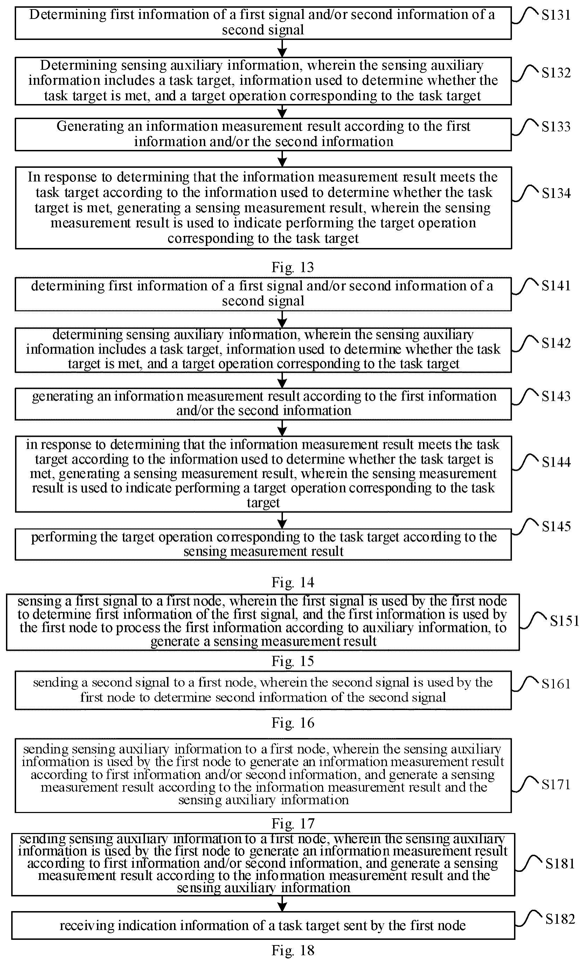

Please refer to Fig. 13, which is a flowchart of yet another local measurement processing method provided in an embodiment of the present disclosure. It should be noted that the local measurement processing method in this embodiment may be performed by a first node. As shown in Fig. 13, the method may include but is not limited to the following steps.

S131, determining first information of a first signal and/or second information of a second signal.

In an embodiment of the present disclosure, the method for the first node to determine the first information of the first signal can refer to the relevant descriptions in the embodiments above, which will not be repeated here.

In an embodiment of the present disclosure, the method for the first node to determine the second information of the second signal can refer to the relevant descriptions in the embodiments above, which will not be repeated here.

S132, determining sensing auxiliary information, wherein the sensing auxiliary information includes a task target, information used to determine whether the task target is met, and a target operation corresponding to the task target.

In an embodiment of the present disclosure, the method for the first node to determine the sensing auxiliary information can refer to the relevant descriptions in the embodiments above, which will not be repeated here.

In an embodiment of the present disclosure, S132 may be performed before S131.

S133, generating an information measurement result according to the first information and/or the second information.

The relevant descriptions of S131 to S133 can refer to the relevant descriptions in the embodiments above, which will not be repeated here.

S134, in response to determining that the information measurement result meets the task target according to the information used to determine whether the task target is met, generating a sensing measurement result, wherein the sensing measurement result is used to indicate performing a target operation corresponding to the task target.

In an embodiment of the present disclosure, in the case where the first node determines that the information measurement result meets the task target according to the information used to determine whether the task target is met, the first node can generate the sensing measurement result, wherein the sensing measurement result is used to indicate performing the target operation corresponding to the task target.

The relevant descriptions of the first node, the first signal, the first information, the second signal, the second information and the sensing auxiliary information can refer to the relevant descriptions in the embodiments above, which will not be repeated here.

It should be noted that in embodiments of the present disclosure, S131 to S134 can be implemented separately or in combination with any other step in the embodiments of the present disclosure, such as S71 to S73 and/or S81 to S84 and/or S91a to S92a and/or S91b to S92b and/or S91c to S92c and/or S101a to S103a and/or S101b to S102b and/or S111a to S112a and/or S111b to S113b and/or S121 to S124, which is not limited in embodiments of the present disclosure.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the first node determines the first information of the first signal and/or the second information of the second signal, determines the sensing auxiliary information, wherein the sensing auxiliary information includes the task target, information for determining whether the task target is met, and the target operation corresponding to the task target, generates the information measurement result based on the first information and/or the second information,, and generates the sensing measurement result in response to determining that the information measurement result meets the task target according to the information used to determine whether the task target is met, wherein the sensing measurement result is used to indicate performing the target operation corresponding to the task target. As a result, the first node can quickly obtain the sensing measurement result, which can improve the efficiency of sensing solution processing, reduce latency, and save signaling overhead.

Please refer to Fig. 14, which is a flowchart of yet another local measurement processing method provided in an embodiment of the present disclosure. It should be noted that the local measurement processing method in this embodiment may be performed by a first node. As shown in Fig. 14, the method may include but is not limited to the following steps.

S141, determining first information of a first signal and/or second information of a second signal.

In an embodiment of the present disclosure, the method for the first node to determine the first information of the first signal can refer to the relevant descriptions in the embodiments above, which will not be repeated here.

In an embodiment of the present disclosure, the method for the first node to determine the second information of the second signal can refer to the relevant descriptions in the embodiments above, which will not be repeated here.

S142, determining sensing auxiliary information, wherein the sensing auxiliary information includes a task target, information used to determine whether the task target is met, and a target operation corresponding to the task target.

In an embodiment of the present disclosure, the method for the first node to determine the sensing auxiliary information can refer to the relevant descriptions in the embodiments above, which will not be repeated here.

In an embodiment of the present disclosure, S142 may be performed before S141.

S143, generating an information measurement result according to the first information and/or the second information.

S144, in response to determining that the information measurement result meets the task target according to the information used to determine whether the task target is met, generating a sensing measurement result, wherein the sensing measurement result is used to indicate performing a target operation corresponding to the task target.

The relevant descriptions of S141 to S144 can refer to the relevant descriptions in some embodiments above, which will not be repeated here.

S145, performing the target operation corresponding to the task target according to the sensing measurement result.

In an embodiment of the present disclosure, after generating the sensing measurement result, the first node determines the target operation corresponding to the task target indicated by the sensing measurement result, and then executes the target operation corresponding to the task target.

In some embodiments, performing the target operation corresponding to the task target by the first node includes at least one of:
indicating the task target to an application layer;
sending indication information of the task target to a second node;
sending indication information of the task target to a third node;
sending indication information of the task target to a fourth node; or
broadcasting indication information of the task target.

In an embodiment of the present disclosure, the first node performs the target operation corresponding to the task target, including indicating the task target to the application layer. The first node may be a terminal, which can perform the target operation corresponding to the task target based on the implementation.

In an embodiment of the present disclosure, the first node performs the target operation corresponding to the task target, including sending indication information of the task target to the second node.

In an embodiment of the present disclosure, the first node performs the target operation corresponding to the task target, including sending indication information of the task target to the third node.

In an embodiment of the present disclosure, the first node performs the target operation corresponding to the task target, including sending indication information of the task target to a fourth node. For example, the first node is a base station, and the fourth node is a sensing control node or sensing data collection node (such as a base station, terminal, SF, LMF, or AMF). The first node can send the indication information of the task target (such as intrusion alarm, flood alarm, etc.) to the fourth node through signaling or user data.

In an embodiment of the present disclosure, the first node performs the target operation corresponding to the task target, including broadcasting the indication information of the task target.

For example, the first node is a base station and the fourth node is a terminal. The first node can send the indication information of the task target (such as intrusion alarms, flood alarms, etc.) to the terminal through broadcasting.

In some embodiments, the fourth node includes at least one of:
a base station;
a terminal;
an SF;
an LMF; or
an AMF.

In an embodiment of the present disclosure, the fourth node may be at least one of a base station, a terminal, an SF, an LMF or an AMF.

It should be noted that the relevant descriptions of the first node, the first signal, the first information, the second signal, the second information and the sensing auxiliary information can refer to the relevant descriptions in the embodiments above, which will not be repeated here.

It should be noted that in embodiments of the present disclosure, S141 to S145 can be implemented separately or in combination with any other step in the embodiments of the present disclosure, such as S71 to S73 and/or S81 to S84 and/or S91a to S92a and/or S91b to S92b and/or S91c to S92c and/or S101a to S103a and/or S101b to S102b and/or S111a to S112a and/or S111b to S113b and/or S121 to S124 and/or S131 to S134, which is not limited in embodiments of the present disclosure.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the first node determines the first information of the first signal and/or the second information of the second signal, determines the sensing auxiliary information, wherein the sensing auxiliary information includes the task target, information for determining whether the task target is met, and the target operation corresponding to the task target, generates the information measurement result based on the first information and/or the second information, generates the sensing measurement result in response to determining that the information measurement result meets the task target according to the information used to determine whether the task target is met, wherein the sensing measurement result is used to indicate performing the target operation corresponding to the task target, and performs the target operation corresponding to the task target according to the sensing measurement result. As a result, the first node can quickly obtain the sensing measurement result, which can improve the efficiency of sensing solution processing, reduce latency, and save signaling overhead.

Please refer to Fig. 15, which is a flowchart of yet another local measurement processing method provided in an embodiment of the present disclosure. It should be noted that the local measurement processing method in this embodiment may be performed by a second node. As shown in Fig. 15, the method may include but is not limited to the following steps.

In S151, sensing a first signal to a first node, wherein the first signal is used by the first node to determine first information of the first signal, and the first information is used by the first node to process the first information according to auxiliary information, to generate a sensing measurement result.

In an embodiment of the present disclosure, the first signal may be a signal for wireless sensing and sensing measurement, such as a sensing signal for flood detection or a sensing signal for house intrusion detection, and so on.

In a possible implementation, the signal used for wireless sensing and sensing measurement may include the sensing signal, and wireless sensing and sensing measurement can be performed based on the sensing signals.

In another possible implementation, the signal used for wireless sensing and sensing measurement may include the sensing signal and the reflected signal of the sensing signal. Wireless sensing and sensing measurement can be performed based on the sensing signal and the reflected signal of the sensing signal.

In yet another possible implementation, the signal used for wireless sensing and sensing measurement may include the reflected signal of the sensing signal, and wireless sensing and sensing measurement can be performed based on the reflected signal of the sensing signal.

It should be noted that the sensing signal used for wireless sensing and sensing measurement may be the signal emitted by a certain node during sensing measurement, and the reflected signal of the sensing signal may be the signal obtained from the signal emitted during sensing measurement and then reflected by the target to be measured and reaching another node, where it is received. Of course, the sensing signal and the reflected signal of the sensing signal can also be referred to by other names, which is not specifically limited in embodiments of the present disclosure.

In embodiments of the present disclosure, the first signal may be the sensing signal, or the reflected signal of the sensing signal, which is not specifically limited in embodiments of the present disclosure.

In a possible implementation, the first signal may be the sensing signal, the second node is the node sending the sensing signal, and the first node is the node receiving the sensing signal.

In another possible implementation, the first signal may be the reflected signal of the sensing signal, the second node is the node sending the reflected signal of the sensing signal, and the first node is the node receiving the reflected signal of the sensing signal.

The first signal is used by the first node to determine the first information of the first signal, and the first information is used by the first node to process the first information according to the auxiliary information, to generate the sensing measurement result.

In some embodiments, the first node includes at least one of:
a terminal;
a base station;
a centralized unit of a base station (gNB-CU); or
a distributed unit of a base station (gNB-DU).

In an embodiment of the present disclosure, the first node may be a terminal.

In an embodiment of the present disclosure, the first node may be a base station, optionally, including a NG-RAN node, or a gNB.

In an embodiment of the present disclosure, the first node may be a centralized unit of a base station (gNB-CU).

In an embodiment of the present disclosure, the first node may be a distributed unit of a base station (gNB-DU).

In some embodiments, the second node includes at least one of:
a terminal;
a base station;
a gNB-CU;
a gNB-DU;
an SF;
an AMF; or
an LMF.

In an embodiment of the present disclosure, the second node may be at least one of a terminal, a base station, a gNB-CU, a gNB-DU, an SF, an AMF, or an LMF.

In some embodiments, the first information includes at least one of:
a geographical location of an antenna for the first signal;
receiving time of the first signal;
a receiving frequency point of the first signal;
a receiving bandwidth of the first signal;
a receiving phase of the first signal;
a receiving amplitude of the first signal;
a receiving power of the first signal;
polarization information of the first signal;
spatial information of the first signal; or
channel state information of the first signal.

In some embodiments, the first information of the first signal may include, but is not limited to, at least one of the geographic location of the antenna for the first signal, the time, frequency, bandwidth, phase (e.g., angle of departure (AOD)), amplitude, power, polarization information, and/or spatial information (including at least one of the radiation parameters of the transmitting antenna, such as half power lobe width, main lobe width, side lobe level, aspect ratio, and/or directional information).

In some embodiments, the auxiliary information includes at least one of:
second information of the second signal; or
sensing auxiliary information.

In an embodiment of the present disclosure, the auxiliary information includes the second information of the second signal.

It can be understood that the signal used for wireless sensing and sensing measurement can include the sensing signal and the reflected signal of the sensing signal. In the case where the first signal is the sensing signal, the second signal can be the reflected signal of the sensing signal, or in the case where the first signal is the reflected signal of the sensing signal, the second signal can be the sensing signal.

In an embodiment of the present disclosure, the auxiliary information includes the sensing auxiliary information.

It can be understood that the sensing auxiliary information can assist the first node in processing the first information of the first signal to generate the sensing measurement result. Alternatively, the sensing auxiliary information can assist the first node in processing the first information of the first signal and the second information of the second signal to generate the sensing measurement result.

In some embodiments, the second node sends the second signal to the first node, wherein the second signal is used by the first node to determine the second information of the second signal.

In an embodiment of the present disclosure, in the case where the auxiliary information includes the second information of the second signal, the second node can send the second signal to the first node to enable the first node to determine the second information of the second signal.

It can be understood that the signal used for wireless sensing and sensing measurement can include the sensing signal and the reflected signal of the sensing signal. In the case where the first node receives the second signal sent by the second node, which is the sensing signal, the first node can send the first signal, where the first signal can be the reflected signal of the sensing signal. Alternatively, in the case where the first node receives the second signal sent by the second node, which is the reflected signal of the sensing signal, the first node can send the first signal to the second node, where the first signal can be the sensing signal.

In some embodiments, the second information includes at least one of:
a geographical location of an antenna for the second signal;
sending time of the second signal;
a sending frequency point of the second signal;
a sending bandwidth of the second signal;
a sending phase of the second signal;
a sending amplitude of the second signal;
a sending power of the second signal;
polarization information of the second signal; or
spatial information of the second signal.

In some embodiments, the second information of the second signal includes, but is not limited to, at least one of the geographical location of the antenna for the second signal, and the time, frequency, bandwidth, phase (e.g. angle of arrival (AOA)), amplitude, power, polarization information, channel state information (e.g. channel state information (CSI), channel quality indicator (CQI), signal to interference plus noise ratio (SINR), signal-to-noise ratio (SNR), etc.), and/or spatial information of the second signal.

In some embodiments, the second node sends the sensing auxiliary information to the first node, wherein the sensing auxiliary information is used by the first node to generate an information measurement result according to the first information and/or the second information, and generate the sensing measurement result according to the information measurement result and the sensing auxiliary information.

In an embodiment of the present disclosure, in the case where the auxiliary information includes the sensing auxiliary information, the second node can send the sensing auxiliary information to the fist node, so that the first node determines the sensing auxiliary information.

In some embodiments, the information measurement result includes a comparison result between the first information and the second information.

In an embodiment of the present disclosure, the information measurement result may include the comparison result between the first information and the second information.

For example, the information measurement result includes the comparison result, which may be at least one of: a phase difference between the first signal and the second signal, or a power difference between the first signal and the second signal, or a time difference between the first signal and the second signal, or a bandwidth difference between the first signal and the second signal, or a frequency difference between the first signal and the second signal, or a frequency offset (such as Doppler frequency offset) between the first signal and the second signal.

In some embodiments, the sensing auxiliary information includes at least one of:
a task target;
information used to determine whether a task target is met; or
a target operation corresponding to a task target.

In an embodiment of the present disclosure, the sensing auxiliary information includes the task target. For example, the task target may be "identifying intrusion", "identifying environment changes", "identifying conflicts", "identifying obstacles", and so on.

In an embodiment of the present disclosure, the sensing auxiliary information includes information used to determine whether the task target is met. The information used to determine whether the task target is met may include information used to determine that the task target is met, or information used to determine that the task target is not met, or information related to determining whether the task target is met, and so on.

In an embodiment of the present disclosure, the sensing auxiliary information includes the target operation corresponding to the task target. The target operation corresponding to the task target may indicate the target operation to be executed when the task target is met.

It can be understood that each task target may correspond to one or more target operations, and one or more target operations may be executed when the task target is met.

In some embodiments, the information used to determine whether the task target is met includes at least one of:
a threshold for judging the information measurement result;
a threshold for judging a change in the information measurement result;
a specific condition for judging a change trend of the information measurement result;
an offset for judging the information measurement result;
a latency for judging the information measurement result;
evaluation time for determining that the information measurement result meets a threshold;
evaluation time for determining that the information measurement result meets a specific condition;
window time used to process the information measurement result;
a signal identification for evaluating the information measurement result;
a path identification for evaluating the information measurement result; or
a number of signals for evaluating the information measurement result.

In an embodiment of the present disclosure, the information used to determine whether the task target is met includes the threshold for judging the information measurement result. For example, if the information measurement result is greater than or less than or equal to the threshold, it can be determined that the task target is met.

In an embodiment of the present disclosure, the information used to determine whether the task target is met includes the threshold for judging the change in the information measurement result. For example, if the change in the information measurement result is greater than or less than or equal to the threshold, it can be determined that the task target is met.

In an embodiment of the present disclosure, the information used to determine whether the task target is met includes the specific condition for judging the change trend of the information measurement result. For example, if the information measurement result changes proportionally over time or frequency points, or changes in a specific pattern, or changes in a specific matrix, it can be determined that the task target is met.

In an embodiment of the present disclosure, the information used to determine whether the task target is met includes the offset for judging the information measurement result. For example, if the change in the information measurement result is greater than or less than or equal to the threshold plus the offset, it can be determined that the task target is met.

In an embodiment of the present disclosure, the information used to determine whether the task target is met includes the latency for judging the information measurement result. For example, if the change in the information measurement result is greater than or less than or equal to the threshold plus or minus the latency, it can be determined that the task target is met.

In an embodiment of the present disclosure, the information used to determine whether the task target is met includes the evaluation time for determining that the information measurement result meets the threshold. For example, if the information measurement result meets the above threshold, or meets the threshold plus the offset, or meets the threshold plus the latency, and its duration reaches the evaluation time, it can be determined that the task target is met.

In an embodiment of the present disclosure, the information used to determine whether the task target is met includes the evaluation time for determining that the information measurement result meets the specific condition. For example, if the information measurement result meets the specific condition, and its duration reaches the evaluation time, it can be determined that the task target is met.

In an embodiment of the present disclosure, the information used to determine whether the task target is met includes the window time used to process the information measurement result. For example, the window time is specified, and the information measurement result is judged based on the information measurement result within the window time.

In an embodiment of the present disclosure, the information used to determine whether the task target is met includes the signal identification for evaluating the information measurement result. For example, the first node can evaluate the changes or change trends of the signal measurement results through multiple first signals at different times or with different parameters, or first signals with different transmission and reception modes. When the signal measurement results or changes in the signal measurement results of the first signals corresponding to the signal identification all reach the threshold, or when the change trends of the signal measurement results of the first signals corresponding to the signal identification all reach the specific condition, it can be determined that the task target is met.

In an embodiment of the present disclosure, the information used to determine whether the task target is met includes the path identification for evaluating the information measurement result. For example, the first node can evaluate the changes or change trends of signal measurement results through the same first signal from different paths. When the signal measurement results or changes in the signal measurement results of the same first signal from different paths all reach the threshold, or when the change trends of signal measurement results of the same first signal from different paths all reach the specific condition, it can be determined that the task target is met.

In an embodiment of the present disclosure, the information used to determine whether the task target is met includes the number of signals for evaluating the information measurement result. For example, the signal measurement results obtained in the unit of window time can be determined to meet the task target when the number of signals whose signal measurement results or changes in the signal measurement results meet the threshold within the window time reaches the number threshold, or when the number of signals whose change trends of the signal measurement results meet the specific condition within the window time reaches the number threshold.

For example, the threshold for the number of signals is 5. When there are 5 signals within the window time whose signal measurement results or changes in the signal measurement results meet the threshold, or there are 5 signals within the window time whose change trends of signal measurement results meets the specific condition, it can be determined that the task target is met.

Of course, the first node can also evaluate the signal measurement results through multiple first signals or the same first signal from different paths. When a certain number of signals meet the criterion, it can be determined that the task target is met.

In an illustrative embodiment, in water level monitoring, when the sensing signal emitted by the transmitting end encounters the surface of the measured medium (e.g. water surface), the emitted sensing signal is reflected to form an echo and transmitted along a fixed path to the receiving end (e.g. first node). Due to the fact that the distance from the transmitting end to the receiving end through the surface of the measured medium is proportional to the propagation time of the signal between them, the water level change information (i.e. transmission path change) can be obtained by calculating the time difference between the sending and receiving of the sensing signal. In this embodiment, the 'measurement result' is the 'time difference between sending and receiving signals'. If the time difference measured within the N^{th} 'window time' is k and the time difference measured within the (N+1)^{th} 'window time' is (k+1), then the change in the measurement result is k minus (k+1). If the change in the measurement result is greater than the 'threshold for judging the change in the measurement result', it can be considered that the task target is met, and the first node can broadcast the 'water level alarm' message.

In an illustrative embodiment, in indoor intrusion detection, when the indoor environment is unmanned, the sensing signal sent by the transmitting end is received by the receiving end (such as the first node), and its channel state (such as channel quality indicator (CQI)) does not experience significant fluctuations; when an intruder appears indoors, the moving human body can cause signal scattering, attenuation, and energy loss, resulting in significant fluctuations in the channel state (such as CQI) of the received signal. In this embodiment, the "measurement result" is the "channel state of the received signal". If the average channel state measured within the N^{th} "window time" is lower than the "threshold used to judge the measurement value result" or if the instantaneous channel state continues to be lower than the "threshold used to judge the measurement value result" during the "evaluation time", it can be considered as "confirmed intrusion" and "intrusion alarm" and/or "more accurate intrusion detection" can be executed.

In some embodiments, the second node receives indication information of the task target sent by the first node.

In an embodiment of the present disclosure, the second node receives the indication information of the task target sent by the first node to the second node, indicating the target operation corresponding to the task target.

For example, in the case where the second node is the terminal, and the first node is the base station, the second node can receive the indication information of the task target sent by the first node through broadcasting.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the second node sends the first signal to the first node, wherein the first signal is used by the first node to determine the first information of the first signal, and the first information is used by the first node to process the first information according to the auxiliary information, to generate the sensing measurement result. Thus, the first node can quickly process the first information based on the auxiliary information, to obtain the sensing measurement result, improving the efficiency of sensing solution processing, reducing latency, and saving signaling overhead.

Please refer to Fig. 16, which is a flowchart of an information sending method provided in an embodiment of the present disclosure. It should be noted that the local measurement processing method in this embodiment may be performed by a second node. As shown in Fig. 16, the method may include but is not limited to the following steps.

S161, sending a second signal to a first node, wherein the second signal is used by the first node to determine second information of the second signal.

In an embodiment of the present disclosure, the second node can send the second signal to the first node, which is used by the first node to determine the second information of the second signal.

It should be noted that the relevant descriptions of the first node, the second node, the second signal and the second information can refer to the relevant descriptions in the above embodiments, which will not be repeated here.

It should be noted that in embodiments of the present disclosure, S 161 can be implemented separately or in combination with any other step in the embodiments of the present disclosure, such as S151, which is not limited in embodiments of the present disclosure.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the second node sends the second signal to the first node, wherein the second signal is sued by the first node to determine the second information of the second signal. Thus, the second node can provide the second information of the second signal to the first node.

Please refer to Fig. 17, which is a flowchart of another information sending method provided in an embodiment of the present disclosure. It should be noted that the local measurement processing method in this embodiment may be performed by a second node. As shown in Fig. 17, the method may include but is not limited to the following steps.

S171, sending sensing auxiliary information to a first node, wherein the sensing auxiliary information is used by the first node to generate an information measurement result according to first information and/or second information, and generate a sensing measurement result according to the information measurement result and the sensing auxiliary information.

In an embodiment of the present disclosure, the second node can send the sensing auxiliary information to the first node, wherein the sensing auxiliary information is used by the first node to generate an information measurement result according to first information and/or second information, and generate a sensing measurement result according to the information measurement result and the sensing auxiliary information.

It should be noted that the relevant descriptions of the first node, the second node, the information measurement result and the sensing auxiliary information can refer to the relevant descriptions in the above embodiments, which will not be repeated here.

It should be noted that in embodiments of the present disclosure, S171 can be implemented separately or in combination with any other step in the embodiments of the present disclosure, such as S151 and/or S161, which is not limited in embodiments of the present disclosure.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the second node sends the sensing auxiliary information to the first node, wherein the sensing auxiliary information is used by the first node to generate the information measurement result according to first information and/or second information, and generate the sensing measurement result according to the information measurement result and the sensing auxiliary information. Thus, the second node can provide the sensing auxiliary information to the first node.

Please refer to Fig. 18, which is a flowchart of yet another information sending method provided in an embodiment of the present disclosure. It should be noted that the local measurement processing method in this embodiment may be performed by a second node. As shown in Fig. 18, the method may include but is not limited to the following steps.

S181, sending sensing auxiliary information to a first node, wherein the sensing auxiliary information is used by the first node to generate an information measurement result according to first information and/or second information, and generate a sensing measurement result according to the information measurement result and the sensing auxiliary information.

The relevant descriptions of S181 can refer to the relevant descriptions in the above embodiments, which will not be repeated here.

S182, receiving indication information of a task target sent by the first node.

In an embodiment of the present disclosure, the second node can receive the indication information of the task target sent by the first node to the second node, the first node performing the target operation corresponding to the task target according to the sensing measurement result.

For example, in the case where the second node is the terminal, the first node is the base station, the second node can receive the indication information of the task target sent by the first node through broadcasting.

It should be noted that the relevant descriptions of the first node, the second node, the information measurement result and the sensing auxiliary information can refer to the relevant descriptions int the above embodiments, which will not be repeated here.

It should be noted that in embodiments of the present disclosure, S181 and S182 can be implemented separately or in combination with any other step in the embodiments of the present disclosure, such as S151 and/or S 161 and/or S171, which is not limited in embodiments of the present disclosure.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the second node sends the sensing auxiliary information to the first node, wherein the sensing auxiliary information is used by the first node to generate the information measurement result according to first information and/or second information, and generate the sensing measurement result according to the information measurement result and the sensing auxiliary information, and receives the indication information of the task target sent by the first node. Thus, the second node can provide the sensing auxiliary information to the first node, and receive the indication information of the task target sent by the first node.

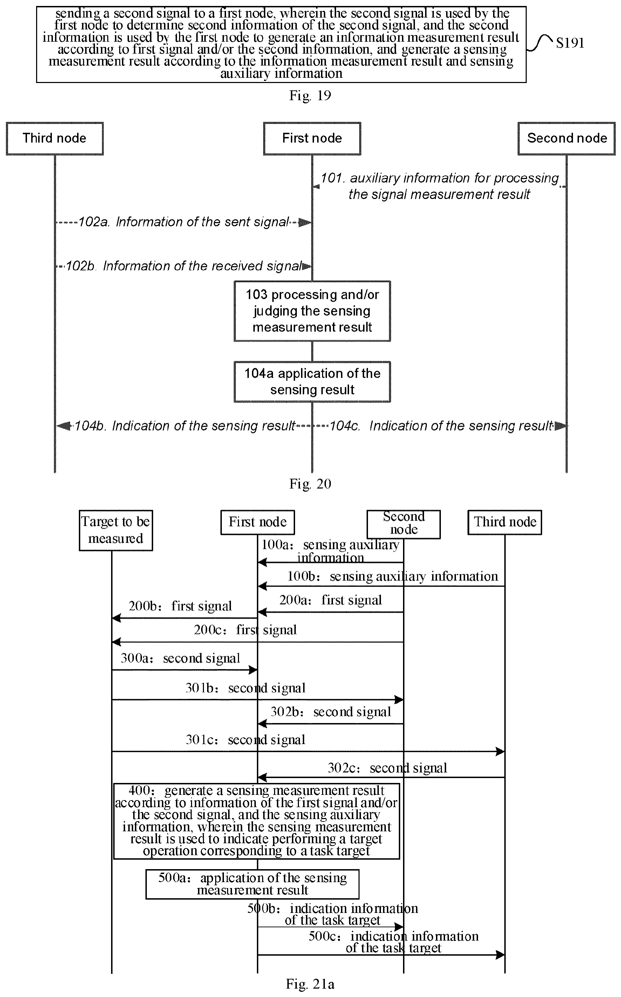

Please refer to Fig. 19, which is a flowchart of yet another local measurement processing method provided in an embodiment of the present disclosure. It should be noted that the local measurement processing method in this embodiment may be performed by a third node. As shown in Fig. 19, the method may include but is not limited to the following steps.

S191, sending a second signal to a first node, wherein the second signal is used by the first node to determine second information of the second signal, and the second information is used by the first node to generate an information measurement result according to first signal and/or the second information, and generate a sensing measurement result according to the information measurement result and sensing auxiliary information.

In an embodiment of the present disclosure, the second signal may be a signal for wireless sensing and sensing measurement, such as a sensing signal for flood detection or a sensing signal for house intrusion detection, and so on.

In a possible implementation, the signal used for wireless sensing and sensing measurement may include the sensing signal, and wireless sensing and sensing measurement can be performed based on the sensing signals.

In another possible implementation, the signal used for wireless sensing and sensing measurement may include the sensing signal and the reflected signal of the sensing signal. Wireless sensing and sensing measurement can be performed based on the sensing signal and the reflected signal of the sensing signal.

It should be noted that the sensing signal used for wireless sensing and sensing measurement may be the signal emitted by a certain node during sensing measurement, and the reflected signal of the sensing signal may be the signal obtained from the signal emitted during sensing measurement and then reflected by the target to be measured and reaching another node, where it is received. Of course, the sensing signal and the reflected signal of the sensing signal can also be referred to by other names, which is not specifically limited in embodiments of the present disclosure.

In an embodiment of the present disclosure, the second signal may be the sensing signal, or may be the reflected signal of the sensing signal.

In a possible implementation, the second signal may be the sensing signal, the third node is the node sending the sensing signal, and the first node is the node receiving the sensing signal.

In another possible implementation, the second signal may be the reflected signal of the sensing signal, the third node is the node sending the reflected signal of the sensing signal, and the first node is the node receiving the reflected signal of the sensing signal.

In an embodiment of the present disclosure, the third node can send the second signal to the first node. The second signal is used by the first node to determine the second information of the second signal. The second information is used by the first node to generate the information measurement result according to the first information and/or the second information, and generate the sensing measurement result according to the information measurement result and the sensing auxiliary information.

It can be understood that the signal used for wireless sensing and sensing measurement can include the sensing signal and the reflected signal of the sensing signal. In the case where the third node sends the second signal to the first node, which is the sensing signal, the first node can send the first signal, where the first signal can be the reflected signal of the sensing signal. Alternatively, in the case where the third node sends the second signal to the first node, which is the reflected signal of the sensing signal, the first node can send the first signal to the third node, where the first signal can be the sensing signal.

In some embodiments, the information measurement result includes a comparison result between the first information and the second information.

In an embodiment of the present disclosure, the information measurement result may include the comparison result between the first information and the second information.

For example, the information measurement result includes the comparison result, which may be at least one of: a phase difference between the first signal and the second signal, or a power difference between the first signal and the second signal, or a time difference between the first signal and the second signal, or a bandwidth difference between the first signal and the second signal, or a frequency difference between the first signal and the second signal, or a frequency offset (such as Doppler frequency offset) between the first signal and the second signal.

In some embodiments, the sensing auxiliary information includes at least one of:
a task target;
information used to determine whether a task target is met; or
a target operation corresponding to a task target.

In an embodiment of the present disclosure, the sensing auxiliary information includes the task target. For example, the task target may be "identifying intrusion", "identifying environment changes", "identifying conflicts", "identifying obstacles", and so on.

In an embodiment of the present disclosure, the sensing auxiliary information includes information used to determine whether the task target is met. The information used to determine whether the task target is met may include information used to determine that the task target is met, or information used to determine that the task target is not met, or information related to determining whether the task target is met, and so on.

In an embodiment of the present disclosure, the sensing auxiliary information includes the target operation corresponding to the task target. The target operation corresponding to the task target may indicate the target operation to be executed when the task target is met.

It can be understood that each task target may correspond to one or more target operations, and one or more target operations may be executed when the task target is met.

In some embodiments, the information used to determine whether the task target is met includes at least one of:
a threshold for judging the information measurement result;
a threshold for judging a change in the information measurement result;
a specific condition for judging a change trend of the information measurement result;
an offset for judging the information measurement result;
a latency for judging the information measurement result;
evaluation time for determining that the information measurement result meets a threshold;
evaluation time for determining that the information measurement result meets a specific condition;
window time used to process the information measurement result;
a signal identification for evaluating the information measurement result;
a path identification for evaluating the information measurement result; or
a number of signals for evaluating the information measurement result.

In an embodiment of the present disclosure, the information used to determine whether the task target is met includes the threshold for judging the information measurement result. For example, if the information measurement result is greater than or less than or equal to the threshold, it can be determined that the task target is met.

In an embodiment of the present disclosure, the information used to determine whether the task target is met includes the threshold for judging the change in the information measurement result. For example, if the change in the information measurement result is greater than or less than or equal to the threshold, it can be determined that the task target is met.

In an embodiment of the present disclosure, the information used to determine whether the task target is met includes the specific condition for judging the change trend of the information measurement result. For example, if the information measurement result changes proportionally over time or frequency points, or changes in a specific pattern, or changes in a specific matrix, it can be determined that the task target is met.

In an embodiment of the present disclosure, the information used to determine whether the task target is met includes the offset for judging the information measurement result. For example, if the change in the information measurement result is greater than or less than or equal to the threshold plus the offset, it can be determined that the task target is met.

In an embodiment of the present disclosure, the information used to determine whether the task target is met includes the latency for judging the information measurement result. For example, if the change in the information measurement result is greater than or less than or equal to the threshold plus or minus the latency, it can be determined that the task target is met.

In an embodiment of the present disclosure, the information used to determine whether the task target is met includes the evaluation time for determining that the information measurement result meets the threshold. For example, if the information measurement result meets the above threshold, or meets the threshold plus the offset, or meets the threshold plus the latency, and its duration reaches the evaluation time, it can be determined that the task target is met.

In an embodiment of the present disclosure, the information used to determine whether the task target is met includes the evaluation time for determining that the information measurement result meets the specific condition. For example, if the information measurement result meets the specific condition, and its duration reaches the evaluation time, it can be determined that the task target is met.

In an embodiment of the present disclosure, the information used to determine whether the task target is met includes the window time used to process the information measurement result. For example, the window time is specified, and the information measurement result is judged based on the information measurement result within the window time.

In an embodiment of the present disclosure, the information used to determine whether the task target is met includes the signal identification for evaluating the information measurement result. For example, the first node can evaluate the changes or change trends of the signal measurement results through multiple first signals at different times or with different parameters, or first signals with different transmission and reception modes. When the signal measurement results or changes in the signal measurement results of the first signals corresponding to the signal identification all reach the threshold, or when the change trends of the signal measurement results of the first signals corresponding to the signal identification all reach the specific condition, it can be determined that the task target is met.

In an embodiment of the present disclosure, the information used to determine whether the task target is met includes the path identification for evaluating the information measurement result. For example, the first node can evaluate the changes or change trends of signal measurement results through the same first signal from different paths. When the signal measurement results or changes in the signal measurement results of the same first signal from different paths all reach the threshold, or when the change trends of signal measurement results of the same first signal from different paths all reach the specific condition, it can be determined that the task target is met.

In an embodiment of the present disclosure, the information used to determine whether the task target is met includes the number of signals for evaluating the information measurement result. For example, the signal measurement results obtained in the unit of window time can be determined to meet the task target when the number of signals whose signal measurement results or changes in the signal measurement results meet the threshold within the window time reaches the number threshold, or when the number of signals whose change trends of the signal measurement results meet the specific condition within the window time reaches the number threshold.

For example, the threshold for the number of signals is 5. When there are 5 signals within the window time whose signal measurement results or changes in the signal measurement results meet the threshold, or there are 5 signals within the window time whose change trends of signal measurement results meets the specific condition, it can be determined that the task target is met.

Of course, the first node can also evaluate the signal measurement results through multiple first signals or the same first signal from different paths. When a certain number of signals meet the criterion, it can be determined that the task target is met.

In an illustrative embodiment, in water level monitoring, when the sensing signal emitted by the transmitting end encounters the surface of the measured medium (e.g. water surface), the emitted sensing signal is reflected to form an echo and transmitted along a fixed path to the receiving end (e.g. first node). Due to the fact that the distance from the transmitting end to the receiving end through the surface of the measured medium is proportional to the propagation time of the signal between them, the water level change information (i.e. transmission path change) can be obtained by calculating the time difference between the sending and receiving of the sensing signal. In this embodiment, the 'measurement result' is the 'time difference between sending and receiving signals'. If the time difference measured within the N^{th} 'window time' is k and the time difference measured within the (N+1)^{th} 'window time' is (k+1), then the change in the measurement result is k minus (k+1). If the change in the measurement result is greater than the 'threshold for judging the change in the measurement result', it can be considered that the task target is met, and the first node can broadcast the 'water level alarm' message.

In an illustrative embodiment, in indoor intrusion detection, when the indoor environment is unmanned, the sensing signal sent by the transmitting end is received by the receiving end (such as the first node), and its channel state (such as channel quality indicator (CQI)) does not experience significant fluctuations; when an intruder appears indoors, the moving human body can cause signal scattering, attenuation, and energy loss, resulting in significant fluctuations in the channel state (such as CQI) of the received signal. In this embodiment, the "measurement result" is the "channel state of the received signal". If the average channel state measured within the N^{th} "window time" is lower than the "threshold used to judge the measurement value result" or if the instantaneous channel state continues to be lower than the "threshold used to judge the measurement value result" during the "evaluation time", it can be considered as "confirmed intrusion" and "intrusion alarm" and/or "more accurate intrusion detection" can be executed.

In some embodiments, the third node receives indication information of the task target sent by the first node.

In an embodiment of the present disclosure, the third node receives the indication information of the task target sent by the first node to the third node, indicating the target operation corresponding to the task target.

For example, in the case where the third node is the terminal, and the first node is the base station, the third node can receive the indication information of the task target sent by the first node through broadcasting.

It should be noted that the relevant descriptions of the first node, the second node, the second signal and the second information can refer to the relevant descriptions in the above embodiments, which will not be repeated here.

In this embodiment or implementation, respective steps can be independently, arbitrarily combined, or exchanged in order without contradiction. Optional implementations or embodiments can be arbitrarily combined and can be combined with other embodiments or implementations in any way.

By implementing the embodiments of the present disclosure, the third node sends the second signal to the first node, wherein the second signal is used by the first node to determine the second information of the second signal, and the second information is used by the first node to generate the information measurement result according to the first information and/or the second information, and generate the sensing measurement result according to the information measurement result and the sensing auxiliary information. Thus, the first node can quickly process the first information based on the auxiliary information, to obtain the sensing measurement result, improving the efficiency of sensing solution processing, reducing latency, and saving signaling overhead.

For the convenience of understanding the embodiments of the present disclosure, an illustrative embodiment is provided.

In the illustrative embodiment, taking the first signal as the received signal (the sensing signal or the reflected signal of the sensing signal) and the auxiliary information as the information related to the processing of the received signal as an example for explanation.

The first node performs: determining the information related to the processing of the received signal, processing and/or judging the received signal, and performing the related operation according to the result of the judging.

In some embodiments, the received signal includes but is not limited to the signal for sensing measurement.

In some embodiments, the first node is the node sending the sensing signal. In other embodiments, the first node is the node receiving the sensing signal. In yet other embodiments, the first node is the node both sending the sensing signal and receiving the sensing information.

In some embodiments, the first node is but not limited to, a base station (NG-RAN node, including gNB), gNB-CU, gNB-DU, or UE.

In some possible implementations, optionally, "determining the information related to the processing of the received signal" includes at least one of:
receiving the auxiliary information for processing the signal measurement result from the second node, wherein the information is used by the first node to process or further process the signal measurement result and/or judge the processed result, and perform the corresponding operation according to the judging result;
determining by the first node the information of the sent signal (second signal) (i.e., the first node sends, the first node receives), or receiving from the third node the information of the sent signal (second signal) (i.e., the first node receives, the third node sends), or receiving from the third node the information of the received signal (i.e., the first node sends, the third node receives).

In some embodiments, the result of the signal processing includes but is not limited to processing the received signal for sensing.

In some embodiments, there may be one or more auxiliary information used to process the signal measurement result, and each auxiliary information used to process the signal measurement result is corresponding to at least one task target and/or task operation information.

In some embodiments, the information of the sent signal (second information of the second signal) includes but is not limited to the geographic location of the antenna for the sent signal, and the time, frequency, bandwidth, phase (e.g., angle of departure (AOD)), amplitude, power, polarization information, and/or spatial information (including radiation parameters of the transmitting antenna, such as half power lobe width, main lobe width, side lobe level, front to back ratio, and/or direction information, etc.) of the sent signal.

In some embodiments, the information of the received signal (first information of the first signal) includes but is not limited to the geographic location of the antenna for the received signal, and the time, frequency, bandwidth, phase (e.g. angle of arrival (AOA)), amplitude, power, polarization information, channel state information (e.g. CSI, CQI, SINR, SNR, etc.), and/or spatial information of the received signal.

The second node and the third node may be base stations, SF, AMF, or LMF, while the third and second nodes may be the same or different.

In some possible implementations, optionally, the "receiving auxiliary information for processing the signal measurement result from the second node " includes receiving one or more pieces of information from the second node, including:
the task target, which corresponds one-to-one with auxiliary information used for processing the signal measurement result, and may be "determining intrusion", "determining environmental changes", "determining conflicts", "determining obstacles", etc;
auxiliary information used for processing the signal measurement result, which is used for processing or further processing and/or determining whether the target of the measurement task is met. The auxiliary information used for processing signal the measurement result includes auxiliary information used for processing one or more signal measurement results.

In some embodiments, the 'signal measurement result' includes the time, frequency, bandwidth, phase (e.g. angle of arrival), amplitude, power, polarization direction, channel state information (e.g. CSI, CQI, SINR, etc.), and/or spatial information of the measured or preliminarily processed received signal.

In some embodiments, the 'signal measurement result' may include a comparison result between the measurement results of the received signal and the sent signal, for example, the comparison result is the phase difference between the received signal and the sent signal, or the power difference between the received signal and the sent signal, or the time difference between the received signal and the sent signal, or the bandwidth difference between the received signal and the sent signal, or the frequency difference or frequency offset (e.g. Doppler frequency offset) between the received signal and the sent signal.

Further, the auxiliary information used for processing the signal measurement result includes at least one of:
a threshold for judging the signal measurement result, for example, if the signal measurement result is greater than or less than or equal to the threshold, the task target is met;
a threshold for judging a change in the signal measurement result, for example, if the change in the signal measurement result is greater than or less than or equal to the threshold, the task target is met;
a change trend of the signal measurement result, for example, if the signal measurement result changes proportionally over time or frequency points, or changes in a specific pattern, or changes in a specific matrix, the task target is met;
an offset and/or a latency for evaluating the signal measurement result, which is the offset and/or latency for evaluating the change or change trend of the signal measurement result;
evaluation time, which is used for evaluating the duration in which the signal measurement result meets the threshold;
window time, which is the unit time used to process the signal measurement result;
a signal identification or a path identification for evaluation, for example, the first node can evaluate the change or change trend in the signal measurement results through multiple different signals, or different paths of the same signal, or signals with different transmission and reception modes, and when the signals or signal path measurement results meet the threshold condition or trend condition, it can be determined that the task target is met;
a number of signals or amount of data for evaluation, for example, the first node can perform evaluation through various signals or different paths of the same signal, and when a certain number or amount is reached, it can be determined that the task target is met;
information of performing the operation, which is used to indicate the first node to perform the corresponding operation when the task target is met.

In some embodiments, for example, in water level monitoring, when the sensing signal emitted by the transmitting end encounters the surface of the measured medium (e.g. water surface), the emitted sensing signal is reflected to form an echo and transmitted along a fixed path to the receiving end (e.g. first node). Due to the fact that the distance from the transmitting end to the receiving end through the surface of the measured medium is proportional to the propagation time of the signal between them, the water level change information (i.e. transmission path change) can be obtained by calculating the time difference between the sending and receiving of the sensing signal. In this embodiment, the 'signal measurement result' is the 'time difference between sent and received signals'. If the time difference measured within the N^{th} 'window time' is k and the time difference measured within the (N+1)^{th} 'window time' is (k+1), then the change in the signal measurement result is k minus (k+1). If the change in the signal measurement result is greater than the 'threshold for judging the change in the measurement result', it can be considered that the task target is met, and the first node can broadcast the 'water level alarm' message.

In some embodiments, for example, in indoor intrusion detection, when the indoor environment is unmanned, the sensing signal sent by the transmitting end is received by the receiving end (such as the first node), and its channel state (such as channel quality indicator (CQI)) does not experience significant fluctuations; when an intruder appears indoors, the moving human body can cause signal scattering, attenuation, and energy loss, resulting in significant fluctuations in the channel state (such as CQI) of the received signal. In this embodiment, the "signal measurement result" is the "channel state of the received signal". If the average channel state measured within the N^{th} "window time" is lower than the "threshold used to judge the measurement value result" or if the instantaneous channel state continues to be lower than the "threshold used to judge the measurement value result" during the "evaluation time", it can be considered as "confirmed intrusion" and "intrusion alarm" and/or "more accurate intrusion detection" can be executed.

In some possible implementations, when the first node determines that the task target is met, the first node performs at least one of the following operations:
indicating the task target to an application layer of the first node (i.e., performing the operation related to the application layer based on the implementation);
sending indication of the task target to a fourth node;
broadcasting indication of the task target.

In some embodiments, if the first node is a base station and the fourth node is a sensing control node or sensing data collection node (such as a base station, UE, SF, LMF, or AMF), the first node sends the indication of the task target (such as intrusion alarms, flood alarms, etc.) to the fourth node through signaling or user data.

In some embodiments, if the first node is a base station and the fourth node is a UE, the first node can send the indication of the task target (such as intrusion alarms, flood alarms, etc.) through broadcasting.

For the convenience of understanding the embodiments of the present disclosure, embodiments of the present disclosure provide an illustrative embodiment.

As shown in Fig. 20, the first node determines the "information related to processing of the information measurement result", which includes steps 101 and 102:
Step 101, the first node (e.g. base station) determines "auxiliary information for processing the information measurement result", which can be generated by the first node or received by the first node from the second node (e.g. SF).

Step 102, the first node determines the information of the sent signal or the information of the received signal, which can be obtained by the first node itself or received from a third node (e.g. SF, base station, or UE).

Step 103, the first node processes the information of the sent signal or the information of the received signal based on the "auxiliary information for processing the information measurement result" to obtain the "result of sensing measurement ", and processes the " result of sensing measurement" based on the "information related to processing of the information measurement result" to obtain the sensing measurement result.

Step 104, the first node applies the sensing measurement result or sends indication information of the sensing measurement result to other nodes (such as SF, base station, or UE) based on the sensing measurement result.

In the embodiment shown in Fig. 20, optionally, in some implementations, step 102 may be executed before step 101.

In the embodiment shown in Fig. 20, optionally, in some implementations, the third node and the second node may be the same node.

In the embodiment shown in Fig. 20, optionally, in some implementations, the first node may send the indication information of the sensing measurement result to nodes other than the second node and the third node.

In the embodiment shown in Fig. 20, optionally, in some implementations, step 101 is an optional step, and in the case where the "auxiliary information for processing the information measurement result" is generated by the first node, step 101 may be not executed.

The specific content of each step shown in Fig. 20 can refer to the corresponding text descriptions of Figs. 7 to 19 above, which will not be repeated here.

For the convenience of understanding embodiments of the present disclosure, the embodiments of the present disclosure provide an illustrative embodiment.

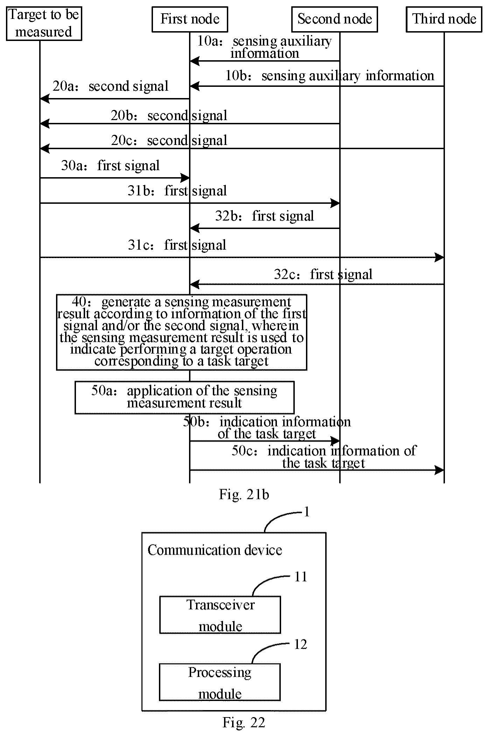

As shown in Fig. 21, in the illustrative embodiment, the first signal is taken as the sensing signal, and the second signal is taken as the reflected signal of the sensing signal for explanation.

In some embodiments, 100a, the first node may receive sensing auxiliary information sent by the second node.

In other embodiments, 100b, the first node may receive sensing auxiliary information sent by the third node.

In some embodiments, 200a, the first node may receive the first signal sent by the second node.

In other embodiments, 200b, the first node may send the first signal.

In yet other embodiments, 200c, the second node may send the first signal to the target to be measured.

In some embodiments, 300a, after the first signal is sent to the target to be measured, it is reflected and the reflected second signal is sent to the first node.

In other embodiments, 301b, after the first signal is sent to the target to be measured, it is reflected and the reflected second signal is sent to the second node.

In a possible implementation, 302b, the second node may send the second signal to the first node.

In yet other embodiments, 301c, after the first signal is sent to the target to be measured, it is reflected and the reflected second signal is sent to the third node.

In a possible implementation, 302c, the third node may send the second signal to the first node.

In some embodiments, after the first node obtains the first signal and/or the second signal, 400, the first node may generate a sensing measurement result according to information of the first signal and/or the second signal, and the sensing auxiliary information, wherein the sensing measurement result is used to indicate performing a target operation corresponding to the task target.

In some embodiments, 500a, the first node performs application of the sensing measurement result.

In a possible implementation, the first node can indicate the task target to the application layer, where the first node may be a terminal.

In another possible implementation, the first node can broadcast indication information of the task target, where the first node may be a base station.

In yet another possible implementation, 500b, the first node may send indication information of the task target to the second node.

In yet another possible implementation, 500c, the first node may send indication information of the task target to the third node.

In the example of Fig. 21a, optionally, in some implementations, 100a is an optional step, and in the case where 100a is not executed, 100b can be executed.

In the example of Fig. 21a, optionally, in some implementations, 100b is an optional step, and in the case where 100b is not executed, 100a can be executed.

In the example of Fig. 21a, optionally, in some implementations, 200b, 200c, 300a, 301b, 302b, 301c, 302c are optional steps, and 200b, 200c, 300a, 301b, 302b, 301c, 302c may not be executed. In this case, the first node can generate the sensing measurement result based on the information of the first signal sent by the second node received in 200a and the sensing auxiliary information.

In the example of Fig. 21a, optionally, in some implementations, 200a, 200c, 300a, 301b, 302b, 301c, and 302c are optional steps, and 200a, 200c, 300a, 301b, 302b, 301c, and 302c may not be executed. In this case, the first node can generate the sensing measurement result based on the information of the first signal sent by the first node in 200b and the sensing auxiliary information.

In the example of Fig. 21a, optionally, in some implementations, 200c is an optional step, and 200b can be executed when 200c is not executed.

In some embodiments, 200a, 301b, 302b, 301c, 302c are optional steps, and 200a, 301b, 302b, 301c, 302c may not be executed. In this case, the first node receives the first signal sent by the first node in 200b and the second signal reflected by the target to be measured in 300a. Thus, the first node can generate the sensing measurement result based on the information of the first signal and/or the second signal, as well as the sensing auxiliary information.

In some embodiments, 200a, 300a, 301c, and 302c are optional steps, and 200a, 300a, 301c, 302c may not be executed. 200b, the first node sends the first signal; 301a, the second signal reflected by the target to be measured is received by the second node; 302b, the second node sends the second signal to the first node. Thus, the first node can generate the sensing measurement result based on the information of the first signal and/or the second signal, as well as the sensing auxiliary information.

In some embodiments, 200a, 300a, 301b, and 302b are optional steps and may not be executed. 200b, the first node sends the first signal; 301c, the second signal obtained after the first signal is reflected by the target to be measured is received by the third node; 302c, the third node sends the second signal to the first node. Thus, the first node can generate the sensing measurement result based on the information of the first signal and/or the second signal, as well as the sensing auxiliary information.

In the example of Fig. 21a, optionally, in some implementations, 200b is an optional step, and 200c can be executed in the case where 200b is not executed.

In some embodiments, 200a, 301b, 302b, 301c, 302c are optional steps, and 200a, 301b, 302b, 301c, 302c may not be executed. In this case, 200c, the second node sends the first signal, and 300a, the second signal reflected at the target to be measured is sent to the first node. Thus, the first node can generate the sensing measurement result based on the information of the second signal and the sensing auxiliary information.

In some embodiments, 200a, 300a, 301c, and 302c are optional steps and may not be executed. In this case, 200c, the second node sends the first signal; 301b, the second signal reflected at the target to be measured is sent to the second node; and 302b, the second node sends the second signal to the first node. Thus, the first node can generate the sensing measurement result based on the information of the second signal and the sensing auxiliary information.

In some embodiments, 200a, 300a, 301b, and 302b are optional steps and may not be executed. In this case, 200c, the second node sends the first signal; 301c, the second signal reflected at the target to be measured is sent to the third node; and 302c, the third node sends the second signal to the first node. Thus, the first node can generate the sensing measurement result based on the information of the second signal and the sensing auxiliary information.

In the example of Fig. 21a, optionally, in some implementations, 200b, 301a, 301b, 302b, 301c, and 302c are optional steps, and 200b, 301b, 302b, 301c, and 302c may not be executed. In this case, 200a, the first node can receive the first signal sent by the second node, and 300a, the first node can receive the second signal obtained after the first signal is reflected at the target to be measured (200c). Thus, the first node can generate the sensing measurement result based on the information of the first signal and/or the second signal, as well as the sensing auxiliary information.

In the example of Fig. 21a, optionally, in some implementations, 200b, 300a, 301c, and 302c are optional steps, and 200b, 300a, 301c, and 302c may not be executed. In this case, 200a, the first node can receive the first signal sent by the second node, and the first signal sent by the second node (200c) is reflected at the target to be measured and the second signal obtained after reflection is received by the second node (301b), and 302b, the second node can send the second signal to the first node. Thus, the first node can generate the sensing measurement result based on the information of the first signal and/or the second signal, as well as the sensing auxiliary information.

In the example of Fig. 21a, optionally, in some implementations, 200b, 300a, 301b, and 302b are optional steps, and 200b, 300a, 301b, and 302b may not be executed. In this case, 200a, the first node can receive the first signal sent by the second node, and the first signal sent by the second node (200c) is reflected at the target to be measured and the second signal obtained after reflection is received by the third node (301c), and 302c, the third node can send the second signal to the first node. Thus, the first node can generate the sensing measurement result based on the information of the first signal and/or the second signal, as well as the sensing auxiliary information.

In the example of Fig. 21a, optionally, in some implementations, 200a, 301a, 301b, 302b, 301c, and 302c are optional steps and 200a, 301b, 302b, 301c, and 302c may not be executed. In this case, 200b, the first node can send the first signal, and 300a, the first node can receive the second signal obtained after the first signal sent by the second node is reflected at the target to be measured (200c). Thus, the first node can generate the sensing measurement result based on the information of the first signal and/or the second signal, as well as the sensing auxiliary information.

In the example of Fig. 21a, optionally, in some implementations, 200a, 300a, 301c, and 302c are optional steps, and 200a, 300a, 301c, and 302c may not be executed. In this case, 200b, the first node can send the first signal, and the first signal sent by the second node (200c) is reflected at the target to be measured and the second signal obtained after reflection is received by the second node (301b), and 302b, the second node can send the second signal to the first node. Thus, the first node can generate the sensing measurement result based on the information of the first signal and/or the second signal, as well as the sensing auxiliary information.

In the example of Fig. 21a, optionally, in some implementations, 200a, 300a, 301b, and 302b are optional steps, and 200a, 300a, 301b, and 302b may not be executed. In this case, 200b, the first node can send the first signal, and the first signal sent by the second node (200c) is reflected at the target to be measured and the second signal obtained after reflection is received by the third node (301c), and 302c, the third node can send the second signal to the first node. Thus, the first node can generate the sensing measurement result based on the information of the first signal and/or the second signal, as well as the sensing auxiliary information.

In the example of Fig. 21a, optionally, in some implementations, 500a is an optional step and may not be executed.

In the example of Fig. 21a, optionally, in some implementations, 500b is an optional step and may not be executed.

In the example of Fig. 21a, optionally, in some implementations, 500c is an optional step and may not be executed.

The relevant descriptions of the first node, the second node, the third node, the information of the first signal (first information), and the information of the second signal (second information) described in Fig. 21a can refer to the relevant descriptions in the above embodiments, which will not be repeated here.

The specific content of each step shown in Fig. 21a can refer to the corresponding text descriptions of Figs. 7 to 20 above, which will not be repeated here.

For the convenience of understanding embodiments of the present discourse, the embodiments of the present disclosure provide an illustrative embodiment.

As shown in Fig. 21b, in the illustrative embodiment, the first signal is taken as the reflected signal of the sensing signal, and the second signal is taken as the sensing signal for explanation.

In some embodiments, 10a, the first node may receive sensing auxiliary information sent by the second node.

In other embodiments, 10b, the first node may receive sensing auxiliary information sent by the third node.

In some embodiments, 20a, the first node may send a second signal.

In other embodiments, 20b, the second node may send a second signal.

In yet other embodiments, 20c, the third node may send a second signal.

In some embodiments, 30a, the first signal obtained after the second signal is reflected at the target to be measured is received by the first node.

In other embodiments, 31b, the first signal obtained after the second signal is reflected at the target to be measured is received by the second node.

In a possible implementation, 32b, the second node may send the first signal to the first node.

In yet other embodiments, 31c, the first signal obtained after the second signal is reflected at the target to be measured is received by the third node.

In a possible implementation, 32c, the third node may send the first signal to the first node.

In some embodiments, after the first node obtains the first signal and/or the second signal, 40, the first node may generate a sensing measurement result based on the information of the first signal and/or the second signal, as well as the sensing auxiliary information, where the sensing measurement result is used to indicate performing a target operation corresponding to the task target.

In some embodiments, 50a, the first node performs the application of the sensing measurement result.

In a possible implementation, the first node may indicate the task target to the application layer, where the first node may be a terminal.

In another possible implementation, the first node may broadcast indication information of the task target, where the first node may be a base station.

In yet another possible implementation, 50b, the first node may send indication information of the task target to the second node.

In yet another possible implementation, 50c, the first node may send indication information of the task target to the third node.

In the example of Fig. 21b, optionally, in some implementations, 10a is an optional step, and in the case where 10a is not executed, 10b can be executed.

In the example of Fig. 21b, optionally, in some implementations, 10b is an optional step, and in the case where 10b is not executed, 10a can be executed.

The relevant descriptions of the first node, the second node, the third node, the information of the first signal (first information), and the information of the second signal (second information) described in Fig. 21b can refer to the relevant descriptions in the above embodiments, and will not be repeated here.

The specific content of each step shown in Fig. 21b can refer to the corresponding text descriptions of Figs. 7 to 20 above, which will not be repeated here.

In the embodiments provided in the present disclosure, the methods provided in the present disclosure are introduced from the perspectives of the first node, the second node, and the third node, respectively.

Please refer to Fig. 22, which is a block diagram of a communication device 1 provided in an embodiment of the present disclosure. The communication device 1 shown in Fig. 22 may include a transceiver module 11 and a processing module. The transceiver module may include a sending module and/or a receiving module. The sending module is used to implement the sending function, and the receiving module is used to implement the receiving function. The transceiver module can implement the sending function and/or the receiving function.

The communication device 1 may be a first node, a second node, or a third node, or a device in the first node, the second node, or the third node, or a device that can be matched and used with the first node, the second node, or the third node.

The communication device 1 is applied to a first node:

The device includes a transceiver module 11.

The transceiver module 11 is configured to receive and/or send a first signal.

The processing module 12 is configured to determine first information of the first signal, and auxiliary information.

The processing module 12 is further configured to process the first information according to the auxiliary information, to generate a sensing measurement result.

In some embodiments, the processing module 12 is further configured to perform a related operation according to the sensing measurement result.

In some embodiments, the transceiver module 11 is further configured to: receive the first signal sent by a second node; or receive the first signal obtained from a second signal sent by a second node and then reflected; or receive the first signal obtained from a second signal sent by the first node and then reflected.

The auxiliary information includes at least one of:
second information of a second signal; or
sensing auxiliary information.

In some embodiments, the processing module 12 is further configured to perform at least one of:
determining the second information of the second signal sent by the first node;
receiving the second signal sent by a second node, and determining the second information of the second signal; or
receiving the second signal sent by a third node, and determining the second information of the second signal.

In some embodiments, the transceiver module 11 is further configured to receive the sensing auxiliary information sent by a second node or a third node.

In some embodiments, the processing module 12 is further configured to: generate an information measurement result according to the first information and/or the second information; and generate the sensing measurement result according to the information measurement result and the sensing auxiliary information.

In some embodiments, the information measurement result includes a comparison result between the first information and the second information.

In some embodiments, the sensing auxiliary information includes at least one of:
a task target;
information used to determine whether a task target is met; or
a target operation corresponding to a task target.

In some embodiments, the information used to determine whether a task target is met includes at least one of:
a threshold for judging the information measurement result;
a threshold for judging a change in the information measurement result;
a specific condition for judging a change trend of the information measurement result;
an offset for judging the information measurement result;
a latency for judging the information measurement result;
evaluation time for determining that the information measurement result meets a threshold;
evaluation time for determining that the information measurement result meets a specific condition;
window time used to process the information measurement result;
a signal identification for evaluating the information measurement result;
a path identification for evaluating the information measurement result; or
a number of signals for evaluating the information measurement result.

In some embodiments, the processing module 12 is further configured to: in response to determining that the information measurement result meets the task target according to the information used to determine whether the task target is met, generate the sensing measurement result, wherein the sensing measurement result is used to indicate performing the target operation corresponding to the task target.

In some embodiments, the processing module 12 is further configured to perform the target operation corresponding to the task target according to the sensing measurement result.

In some embodiments, the transceiver module 11 is further configured to perform at least one of:
indicating the task target to an application layer;
sending indication information of the task target to a second node;
sending indication information of the task target to a third node;
sending indication information of the task target to a fourth node; or
broadcasting indication information of the task target.
In some embodiments, the first information includes at least one of:
a geographical location of an antenna for the first signal;
receiving time of the first signal;
a receiving frequency point of the first signal;
a receiving bandwidth of the first signal;
a receiving phase of the first signal;
a receiving amplitude of the first signal;
a receiving power of the first signal;
polarization information of the first signal;
spatial information of the first signal; or
channel state information of the first signal.

In some embodiments, the second information includes at least one of:
a geographical location of an antenna for the second signal;
sending time of the second signal;
a sending frequency point of the second signal;
a sending bandwidth of the second signal;
a sending phase of the second signal;
a sending amplitude of the second signal;
a sending power of the second signal;
polarization information of the second signal; or
spatial information of the second signal.

The communication device 1 is applied to a second node:

The device includes a transceiver module 11.

The transceiver module 11 is configured to send a first signal to a first node, wherein the first signal is used by the first node to determine first information of the first signal, and the first information is used by the first node to process the first information according to auxiliary information, to generate a sensing measurement result.

In some embodiments, the auxiliary information includes at least one of:
second information of a second signal; or
sensing auxiliary information.

In some embodiments, the transceiver module 11 is further configured to send the second signal to the first node, wherein the second signal is used by the first node to determine the second information of the second signal.

In some embodiments, the transceiver module 11 is further configured to send sensing auxiliary information to the first node, wherein the sensing auxiliary information is used by the first node to generate an information measurement result according to the first information and/or the second information, and generate the sensing measurement result according to the information measurement result and the sensing auxiliary information.

In some embodiments, the information measurement result includes a comparison result between the first information and the second information.

In some embodiments, the sensing auxiliary information includes at least one of:
a task target;
information used to determine whether a task target is met; or
a target operation corresponding to a task target.

In some embodiments, the information used to determine whether a task target is met includes at least one of:
a threshold for judging the information measurement result;
a threshold for judging a change in the information measurement result;
a specific condition for judging a change trend of the information measurement result;
an offset for judging the information measurement result;
a latency for judging the information measurement result;
evaluation time for determining that the information measurement result meets a threshold;
evaluation time for determining that the information measurement result meets a specific condition;
window time used to process the information measurement result;
signal identification for evaluating the information measurement result;
path identification for evaluating the information measurement result; or
a number of signals for evaluating the information measurement result.

In some embodiments, the transceiver module 11 is further configured to receive indication information of a task target sent by the first node.

In some embodiments, the first information includes at least one of:
a geographical location of an antenna for the first signal;
receiving time of the first signal;
a receiving frequency point of the first signal;
a receiving bandwidth of the first signal;
a receiving phase of the first signal;
a receiving amplitude of the first signal;
a receiving power of the first signal;
polarization information of the first signal;
spatial information of the first signal; or
channel state information of the first signal.

In some embodiments, the second information includes at least one of:
a geographical location of an antenna for the second signal;
sending time of the second signal;
a sending frequency point of the second signal;
a sending bandwidth of the second signal;
a sending phase of the second signal;
a sending amplitude of the second signal;
a sending power of the second signal;
polarization information of the second signal; or
spatial information of the second signal.

The communication device 1 is applied to a third node:

The device includes a transceiver module 11.

The transceiver module 11 is configured to send a second signal to a first node, wherein the second signal is used by the first node to determine second information of the second information, wherein the second information is used by the first node to generate an information measurement result according to first information and/or the second information, and generate a sensing measurement result according to the information measurement result and sensing auxiliary information.

In some embodiments, the information measurement result includes a comparison result between the first information and the second information.

In some embodiments, the sensing auxiliary information includes at least one of:
a task target;
information used to determine whether a task target is met; or
a target operation corresponding to a task target.

In some embodiments, the information used to determine whether a task target is met includes at least one of:
a threshold for judging the information measurement result;
a threshold for judging a change in the information measurement result;
a specific condition for judging a change trend of the information measurement result;
an offset for judging the information measurement result;
a latency for judging the information measurement result;
evaluation time for determining that the information measurement result meets a threshold;
evaluation time for determining that the information measurement result meets a specific condition;
window time used to process the information measurement result;
signal identification for evaluating the information measurement result;
path identification for evaluating the information measurement result; or
a number of signals for evaluating the information measurement result.

In some embodiments, the transceiver module 11 is further configured to receive indication information of a task target sent by the first node.

In some embodiments, the second information includes at least one of:
a geographical location of an antenna for the second signal;
sending time of the second signal;
a sending frequency point of the second signal;
a sending bandwidth of the second signal;
a sending phase of the second signal;
a sending amplitude of the second signal;
a sending power of the second signal;
polarization information of the second signal; or
spatial information of the second signal.

Regarding the communication device 1 in the above embodiments, the specific ways in which each module performs operations have been described in detail in the relevant embodiments of the method, and will not be elaborated here.

The communication device 1 provided in the above embodiments of the present disclosure achieves the same or similar beneficial effects as the local measurement processing methods provided in some of the above embodiments, and will not be repeated here.

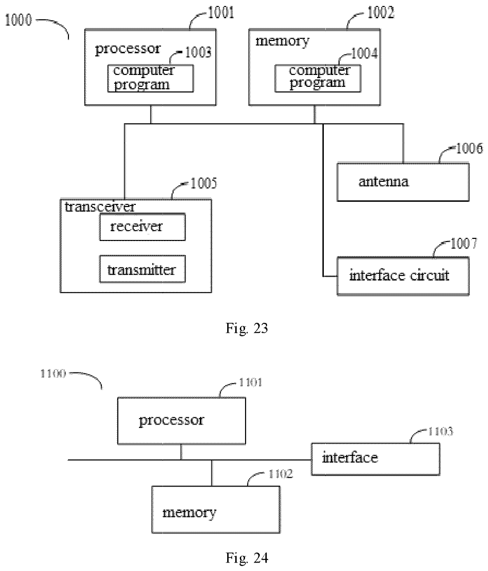

Please refer to Fig. 23, which is a block diagram of another communication device 1000 provided in an embodiment of the present disclosure. The communication device 1000 may be a first node, a second node, or a third node, or a chip, chip system, or processor that supports the implementation of the above methods by the first node, the second node, or the third node. The communication device 1000 can be used to implement the method described in the above method embodiments. For details, please refer to the description in the above method embodiments.

The communication device 1000 may include one or more processors 1001. The processor 1001 may be a general-purpose processor or a dedicated processor, etc. For example, it may be a baseband processor or a central processor. The baseband processor can be used to process communication protocols and communication data, while the central processor can be used to control communication devices (such as network side devices, baseband chips, terminals, terminal chips, DU or CU, etc.), execute computer programs, and process data from computer programs.

Optionally, the communication device 1000 may also include one or more memories 1002, on which computer programs 1004 may be stored. The memory 1002 executes the computer programs 1004 to enable the communication device 1000 to perform the methods described in the above method embodiments. Optionally, the memory 1002 may also store data. The communication device 1000 and the memory 1002 can be set separately or integrated together.

Optionally, the communication device 1000 may also include a transceiver 1005 and an antenna 1006. The transceiver 1005 can be referred to as a transceiver unit, transceiver machine, or transceiver circuit, etc., used to implement the sending and receiving function. The transceiver 1005 may include a receiver and a transmitter, where the receiver can be referred to as a receiver machine or receiving circuit, etc., used to implement the receiving function; the transmitter can be referred to as a transmitter machine or a transmission circuit, etc., used to implement the sending function.

Optionally, the communication device 1000 may also include one or more interface circuits 1007. The interface circuit 1007 is configured to receive code instructions and transmit them to processor 1001. The processor 1001 executes the code instructions to cause the communication device 1000 to perform the method described in the above method embodiments.

In an implementation, the processor 1001 may include a transceiver for implementing receiving and sending functions. For example, the transceiver may be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In an implementation, the processor 1001 may store computer program 1003, which when run on the processor 1001, enables the communication device 1000 to perform the method described in the above method embodiments. The computer program 1003 may be fixed in the processor 1001, in which case the processor 1001 may be implemented by hardware.

In an implementation, the communication device 1000 may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication device described in the above embodiments may be a first node, a second node, or a third node, but the scope of the communication device described in this disclosure is not limited to this, and the structure of the communication device may not be limited by Fig. 23. The communication device may be a standalone device or a part of a larger device. For example, the communication device may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal device, intelligent terminal device, cellular phone, wireless device, handheld device, mobile unit, vehicle mounted device, network device, cloud device, artificial intelligence device, etc;
(6) Others and so on.

For the communication device that can be a chip or chip system, please refer to Fig. 24, which is a block diagram of a chip provided in an embodiment of the present disclosure.

The chip 1100 includes processors 1101 and interfaces 1103. The number of processors 1101 can be one or more, and the number of interfaces 1103 can be multiple.

For the case where the chip is configured to implement the functions of the first node in the embodiments of the present disclosure:
the interface 1103 is configured to receive code instructions and transmit the code instructions to the processor;
the processor 1101 is configured to run the code instructions to implement the local measurement processing method described in some of the above embodiments.

For the case where the chip is configured to implement the functions of the second node in the embodiments of the present disclosure:
the interface 1103 is configured to receive code instructions and transmit the code instructions to the processor;
the processor 1101 is configured to run the code instructions to implement the local measurement processing method described in some of the above embodiments.

For the case where the chip is configured to implement the functions of the third node in the embodiments of the present disclosure:
the interface 1103 is configured to receive code instructions and transmit the code instructions to the processor;
the processor 1101 is configured to run the code instructions to implement the local measurement processing method described in some of the above embodiments.

Optionally, the chip 1100 also includes a memory 1102 for storing necessary computer programs and data.

Technicians in this field can also understand that various illustrative logical blocks and steps listed in the embodiments of the present disclosure can be implemented through electronic hardware, computer software, or a combination of both. Whether such functionality is implemented through hardware or software depends on the specific application and the design requirements of the entire system. Technicians in this field can use various methods to implement the described functions for each specific application, but such implementation should not be understood as exceeding the scope of protection of the disclosed embodiments.

An embodiment of the present disclosure also provides a local measurement processing system. The system includes a communication device as a first node, a communication device as a second node and a communication device as a third node in the aforementioned embodiment of Fig. 22, or the system includes a communication device as a first node, a communication device as a second node and a communication device as a third node in the aforementioned embodiment of Fig. 23.

The present disclosure also provides a readable storage medium storing instructions that, when executed by a computer, implement the functions of any of the method embodiments described above.

The present disclosure also provides a computer program product that, when executed by a computer, implements the functions of any of the method embodiments described above.

In the above embodiments, it can be fully or partially implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "multiple" \can be two, three, four, or more, without limitation in this disclosure. In embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

Depending on the context, the words "if" and "in the case where" used here can be interpreted as "when" or "upon" or "in response to determining".

The correspondenc relationships shown in each table in this disclosure can be configured or predefined. The values of the information in each table are only examples and can be configured as other values, which are not limited by this disclosure. When configuring the correspondence between information and various parameters, it is not necessarily required to configure all the correspondence relationships shown in each table. For example, in the table disclosed herein, the correspondence relationships shown in certain rows may not be configured. For another example, appropriate deformation adjustments can be made based on the above table, such as splitting, merging, and so on. The names of the parameters shown in titles in the above tables can also be other names that the communication device can understand, and the values or representations of the parameters can also be other values or representations that the communication device can understand. The above tables can also be implemented using other data structures, such as arrays, queues, containers, stacks, linear tables, pointers, linked lists, trees, graphs, structures, classes, heaps, hash tables, etc.

The predefined in this disclosure can be understood as defined, defined in advance, stored, pre-stored, pre-negotiated, pre-configured, solidified, or pre-fired.

Ordinary technical personnel in this field can realize that the units and algorithm steps described in combination with the embodiments disclosed in this article can be implemented using electronic hardware, or a combination of computer software and electronic hardware. Whether these functions are executed in hardware or software depends on the specific application and design constraints of the technical solution. Professional technicians can use different methods to achieve the described functionality for each specific application, but such implementation should not be considered beyond the scope of this disclosure.

Technicians in the relevant field can clearly understand that, for the convenience and simplicity of description, the specific working processes of the systems, devices, and units described above can refer to the corresponding processes in the aforementioned method embodiments, which will not be repeated here.

The above is only a specific implementation of the present disclosure, but the scope of protection of the present disclosure is not limited to this. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

## Claims

1. A local measurement processing method, performed by a first node, comprising:
receiving and/or sending a first signal;
determining first information of the first signal, and auxiliary information; and
processing the first information according to the auxiliary information, to generate a sensing measurement result.

2. The method of claim 1, further comprising:
performing a related operation according to the sensing measurement result.

3. The method of claim 1 or 2, wherein receiving the first signal comprises:
receiving the first signal sent by a second node; or
receiving the first signal obtained from a second signal sent by a second node and then reflected; or
receiving the first signal obtained from a second signal sent by the first node and then reflected.

4. The method of any of claims 1-3, wherein the auxiliary information comprises at least one of:
second information of a second signal; or
sensing auxiliary information.

5. The method of claim 4, wherein determining the auxiliary information comprises at least one of:
determining the second information of the second signal sent by the first node;
receiving the second signal sent by a second node, and determining the second information of the second signal; or
receiving the second signal sent by a third node, and determining the second information of the second signal.

6. The method of claim 4, wherein determining the auxiliary information comprises:
receiving the sensing auxiliary information sent by a second node or a third node.

7. The method of any of claims 4-6, wherein processing the first information according to the auxiliary information, to generate a sensing measurement result comprises:
generating an information measurement result according to the first information and/or the second information; and
generating the sensing measurement result according to the information measurement result and the sensing auxiliary information.

8. The method of claim 7, wherein the information measurement result comprises a comparison result between the first information and the second information.

9. The method of claim 7 or 8, wherein the sensing auxiliary information comprises at least one of:
a task target;
information used to determine whether a task target is met; or
a target operation corresponding to a task target.

10. The method of claim 9, wherein the information used to determine whether a task target is met comprises at least one of:
a threshold for judging the information measurement result;
a threshold for judging a change in the information measurement result;
a specific condition for judging a change trend of the information measurement result;
an offset for judging the information measurement result;
a latency for judging the information measurement result;
evaluation time for determining that the information measurement result meets a threshold;
evaluation time for determining that the information measurement result meets a specific condition;
window time used to process the information measurement result;
a signal identification for evaluating the information measurement result;
a path identification for evaluating the information measurement result; or
a number of signals for evaluating the information measurement result.

11. The method of claim 9 or 10, wherein generating the sensing measurement result according to the information measurement result and the sensing auxiliary information comprises:
in response to determining that the information measurement result meets the task target according to the information used to determine whether the task target is met, generating the sensing measurement result, wherein the sensing measurement result is used to indicate performing the target operation corresponding to the task target.

12. The method of claim 11, further comprising:
performing the target operation corresponding to the task target according to the sensing measurement result.

13. The method of claim 12, wherein performing the target operation corresponding to the task target comprises at least one of:
indicating the task target to an application layer;
sending indication information of the task target to a second node;
sending indication information of the task target to a third node;
sending indication information of the task target to a fourth node; or
broadcasting indication information of the task target.

14. The method of any of claims 1-13, wherein the first information comprises at least one of:
a geographical location of an antenna for the first signal;
receiving time of the first signal;
a receiving frequency point of the first signal;
a receiving bandwidth of the first signal;
a receiving phase of the first signal;
a receiving amplitude of the first signal;
a receiving power of the first signal;
polarization information of the first signal;
spatial information of the first signal; or
channel state information of the first signal.

15. The method of any of claims 4-13, wherein the second information comprises at least one of:
a geographical location of an antenna for the second signal;
sending time of the second signal;
a sending frequency point of the second signal;
a sending bandwidth of the second signal;
a sending phase of the second signal;
a sending amplitude of the second signal;
a sending power of the second signal;
polarization information of the second signal; or
spatial information of the second signal.

16. A local measurement processing method, performed by a second node, comprising:
sending a first signal to a first node, wherein the first signal is used by the first node to determine first information of the first signal, and the first information is used by the first node to process the first information according to auxiliary information, to generate a sensing measurement result.

17. The method of claim 16, wherein the auxiliary information comprises at least one of:
second information of a second signal; or
sensing auxiliary information.

18. The method of claim 17, further comprising:
sending the second signal to the first node, wherein the second signal is used by the first node to determine the second information of the second signal.

19. The method of claim 17 or 18, further comprising:
sending sensing auxiliary information to the first node, wherein the sensing auxiliary information is used by the first node to generate an information measurement result according to the first information and/or the second information, and generate the sensing measurement result according to the information measurement result and the sensing auxiliary information.

20. The method of claim 19, wherein the information measurement result comprises a comparison result between the first information and the second information.

21. The method of claim 19 or 20, wherein the sensing auxiliary information comprises at least one of:
a task target;
information used to determine whether a task target is met; or
a target operation corresponding to a task target.

22. The method of claim 21, wherein the information used to determine whether a task target is met comprises at least one of:
a threshold for judging the information measurement result;
a threshold for judging a change in the information measurement result;
a specific condition for judging a change trend of the information measurement result;
an offset for judging the information measurement result;
a latency for judging the information measurement result;
evaluation time for determining that the information measurement result meets a threshold;
evaluation time for determining that the information measurement result meets a specific condition;
window time used to process the information measurement result;
signal identification for evaluating the information measurement result;
path identification for evaluating the information measurement result; or
a number of signals for evaluating the information measurement result.

23. The method of any of claims 16-22, further comprising:
receiving indication information of a task target sent by the first node.

24. The method of any of claims 16-23, wherein the first information comprises at least one of:
a geographical location of an antenna for the first signal;
receiving time of the first signal;
a receiving frequency point of the first signal;
a receiving bandwidth of the first signal;
a receiving phase of the first signal;
a receiving amplitude of the first signal;
a receiving power of the first signal;
polarization information of the first signal;
spatial information of the first signal; or
channel state information of the first signal.

25. The method of any of claims 17-23, wherein the second information comprises at least one of:
a geographical location of an antenna for the second signal;
sending time of the second signal;
a sending frequency point of the second signal;
a sending bandwidth of the second signal;
a sending phase of the second signal;
a sending amplitude of the second signal;
a sending power of the second signal;
polarization information of the second signal; or
spatial information of the second signal.

26. A local measurement processing method, performed by a third node, comprising:
sending a second signal to a first node, wherein the second signal is used by the first node to determine second information of the second information, wherein the second information is used by the first node to generate an information measurement result according to first information and/or the second information, and generate a sensing measurement result according to the information measurement result and sensing auxiliary information.

27. The method of claim 26, wherein the information measurement result comprises a comparison result between the first information and the second information.

28. The method of claim 26 or 27, wherein the sensing auxiliary information comprises at least one of:
a task target;
information used to determine whether a task target is met; or
a target operation corresponding to a task target.

29. The method of claim 28, wherein the information used to determine whether a task target is met comprises at least one of:
a threshold for judging the information measurement result;
a threshold for judging a change in the information measurement result;
a specific condition for judging a change trend of the information measurement result;
an offset for judging the information measurement result;
a latency for judging the information measurement result;
evaluation time for determining that the information measurement result meets a threshold;
evaluation time for determining that the information measurement result meets a specific condition;
window time used to process the information measurement result;
signal identification for evaluating the information measurement result;
path identification for evaluating the information measurement result; or
a number of signals for evaluating the information measurement result.

30. The method of any of claims 26-29, further comprising:
receiving indication information of a task target sent by the first node.

31. The method of any of claims 26-30, wherein the second information comprises at least one of:
a geographical location of an antenna for the second signal;
sending time of the second signal;
a sending frequency point of the second signal;
a sending bandwidth of the second signal;
a sending phase of the second signal;
a sending amplitude of the second signal;
a sending power of the second signal;
polarization information of the second signal; or
spatial information of the second signal.

32. A communication device, applied to a first node, comprising:
a transceiver module, configured to receive or send a first signal; and
a processing module, configured to determine first information of the first signal, and auxiliary information;
wherein the processing module is further configured to process the first information according to the auxiliary information, to generate a sensing measurement result.

33. A communication device, applied to a second node, comprising:
a transceiver module, configured to send a first signal to a first node, wherein the first signal is used by the first node to determine first information of the first signal, and the first information is used by the first node to process the first information according to auxiliary information, to generate a sensing measurement result.

34. A communication device, applied to a third node, comprising:
a transceiver module, configured to send a second signal to a first node, wherein the second signal is used by the first node to determine second information of the second information, wherein the second information is used by the first node to generate an information measurement result according to first information and/or the second information, and generate a sensing measurement result according to the information measurement result and sensing auxiliary information.

35. A communication device, comprising a processor and a memory, wherein the memory stores a computer program, and the processor is configured to execute the computer program stored in the memory to cause the device to perform the method of any of claims 1-15, or to cause the device to perform the method of any of claims 16-25, or to cause the device to perform the method of any of claims 26-31.

36. A communication device, comprising a processor and an interface circuit, wherein
the interface circuit is configured to receive code instructions and transmit the code instructions to the processor;
the processor is configured to run the code instructions to execute the method of any of claims 1-15, or to run the code instructions to execute the method of any of claims 16-25, or to run the code instructions to execute the method of any of claims 26-31.

37. A computer-readable storage medium for storing instructions that, when executed, enable the method of any of claims 1-15 to be implemented, or enable the method of any of claims 16-25 to be implemented, or enable the method of any of claims 26-31 to be implemented.
